# EUROPEAN PATENT APPLICATION

(11) **EP 1 480 102 A2**
(43) Date of publication of application: **24.11.2004**
(21) Application number: 04252269.8
(22) Date of filing: 16.04.2004
(51) Int. Cl.: G06F 1/00

(54) **A gaming software distribution network in a gaming system environment**

(30) Priority: 16.04.2003 US 463314 P
(71) Applicant: WMS Gaming Inc, Chicago, Illinois 60618 (US)
(72) Inventor: Gentles, Thomas A., Algonquin Illinois 60102 (US); Ryan, Chad A., Lisle Illinois 60532-2194 (US); Schwartz, Richard T., Chicago Illinois 60614 (US); Swamy, Vikram, Chicago Illinois 60640 (US)
(74) Representative: Butler, Michael John

(57) **Abstract**

In one embodiment, a secure gaming system includes at least one gaming terminal and at least one gaming system server. The terminal(s) and server(s) communicate over a communication network. In one embodiment, a server forwards unapproved gaming software over the communication network to a lab, where the lab is configured to test compliance of the unapproved gaming software with a plurality of regulations. The server receives a notification of approval of the unapproved gaming software, where the notification of approval indicates compliance of the unapproved gaming software with the plurality of regulations. The server changes the status of the unapproved gaming software to form approved gaming software. When the server receives a request for a license to use the approved gaming software, along with an indication of payment for the license, the server downloads the approved gaming software to the requestor.

## Description

This invention is directed to secure gaming system environments including gaming devices configured to provide reel slots, poker, video slots, multiple games, and progressive jackpots, and more particularly, to a gaming software distribution network in a gaming system environment.

Gaming terminals providing games such as electronically driven games such as video slot, video poker, video blackjack, video keno, video bingo, video pachinko, video lottery, and mechanically driven reel slot games, etc., are well known in the gaming industry. Also well known, is the fact that preventing cheating and ensuring fair play of the games are crucial to the gaming industry. As a result, within a gaming jurisdiction (i.e., a particular geographic area allowing gaming), a regulatory body is tasked with regulating the games played in that gaming jurisdiction. In virtually all jurisdictions, there are varied but stringent regulatory restrictions regarding the gaming terminals and their associated games. Accordingly, a varied but rigorous approval process of new and modified gaming software is implemented by all gaming jurisdictions. In addition, steps to manually authenticate and verify the new and modified gaming software are typically required after the gaming terminals are delivered to a gaming proprietor.

Currently, due to in part to gaming regulatory requirements and security concerns, games are provided to the individual gaming terminals via one or more erasable programmable read-only memories (EPROM) or electrically erasable PROMs (EEPROM) programmed with gaming software. If the game is provided by a manually installed EPROM, it can only be erased via ultraviolet light. If the game is provided by a manually installed EEPROM, is can only be erased via application of higher than normal electrical voltage. Typically, gaming terminals also include a number of EPROMs programmed to execute basic input/output system (BIOS) functions, various game software programs such as slot, bingo, etc., operating system software, audio functions, diagnostics functions, and to determine game play outcomes using random number generator (RNG) functions and paytables.

Authenticating the EPROM software requires manual removal of the EPROM by a gaming commission agent and/or a gaming proprietor. A Kobetron MT-2000 or similar diagnostic device is then used to execute an algorithm on the EPROM software. Execution of the algorithm produces an electronic signature that is compared to a previously approved and expected signature (calculated from the data content of a master EPROM approved by the gaming commission). If the electronic signatures match, the gaming software is deemed "authentic" and no action is taken. If, however, the electronic signatures do not match, the gaming software is not authentic, tampering is suspected, the gaming terminal is taken out of service and an investigation is conducted by the gaming commission, the gaming terminal owner, and/or the gaming terminal provider. In some cases, tamper evident security tape is used to secure the EPROM to a main processor board of the gaming terminal to indicate tampering.

In order to comply with the varied regulatory restrictions required by the different gaming jurisdictions, manufacturers of gaming terminals and associated software, for example, WMS Gaming, Inc., must either develop one "large" software version of a particular game suitable for use in all of the gaming jurisdictions, or develop individual customized gaming software versions of the particular game suitable for use in corresponding individual gaming jurisdictions. Of course, both approaches require additional memory resources and manpower. In addition, after each gaming terminal is delivered to the gaming proprietor, installation of any modifications or "patches" to the gaming software require execution of a manual and time-consuming authentication process of all affected EPROMs by a gaming technician.

Generally gaming terminals are configured to operate as "stand-alone" units (that may or may not be coupled to a backroom computer) where the outcome of game play is "locally determined", or as part of a server-based gaming network where the outcome of game play may be either locally determined or "centrally determined". For example, a gaming terminal located in a bar, a convenience store, a riverboat, or an airplane, may operate as a stand-alone unit, while a gaming terminal located in a traditional casino may operate as part of a server-based gaming network within the casino.

The server-based gaming networks typically include a number of gaming terminals, communicatively coupled via a dedicated (i.e., non-public) communication network to one or more server(s). Because of their versatility, server-based gaming networks enable a gaming proprietor (e.g., Harrah's) to augment the traditional "base" game play with enhancements such as community progressive games, community bonus games, tournaments, etc. Server-based gaming network configurations also enable access to all types of gaming terminal data including gaming terminal performance data, player tracking data, accounting data, security data, and maintenance data, to name a few.

In cases where a gaming proprietor owns multiple casinos distributed over a large geographical area, individual casinos may be linked together via a large dedicated communication network. In addition, one or more servers in a individual casino may be communicatively coupled via the dedicated communication network to one or more remote database servers, thereby enabling the gaming proprietor to gather gaming data and operate and maintain the gaming network at one convenient location.

Although costly to install and maintain, dedicated communication networks provide a relatively secure network for transmission of gaming terminal data to the local or remote server(s). Ideally, gaming terminal data can be securely uploaded from the gaming terminals to one or more of the server(s) of the server-based gaming network using the dedicated gaming network. However, due to current gaming regulatory practices, gaming software generally cannot be downloaded from the server(s) to the individual gaming terminals of the server-based gaming network described above. Additionally, because of security concerns, direct communication between individual gaming terminals and remotely located servers is generally precluded in most jurisdictions today. Therefore, operation of the remote server is typically limited to data collection and associated report generation.

### BRIEF DESCRIPTION OF THE DRAWINGS

FIG. 1 is a block diagram of an embodiment of a secure gaming system environment including gaming devices and security elements in accordance with an embodiment of the invention;
FIG. 2 is a block diagram of the electronic components of the gaming devices and the security elements of FIG. 1;
FIG. 3A-3B is a flowchart of a security routine that may be performed by one or more of the security elements of FIG. 1 and FIGs. 4A and 4B;
FIG. 3C is a flowchart of a certification authority initialization routine that may be performed by one or more of the security elements or gaming devices of FIG.1 and FIGs. 4A and 4B;
FIG. 3D is a flowchart of a gaming device key generation and signing routine that may be performed by one or more of the security elements or gaming devices of FIG. 1 and FIGs. 4A and 4B;
FIGs. 3E-3G is a flowchart of a digital certificate authentication routine that may be performed by one or more of the security elements or gaming devices of FIG.1 and FIGs. 4A and 4B;
FIGs. 4A and 4B are block diagrams of an embodiment of a detailed secure gaming system in accordance with an embodiment of the invention;
FIG. 5 is a flowchart of an authentication routine that may be performed by the gaming devices of FIG. 1 and FIGs. 4A and 4B;
FIG. 6 is a high level flowchart of a gaming software approval and distribution routine that may be performed by one or more gaming devices of FIG. 1 and FIGs. 4A and 4B;
Fig. 7 is a perspective view of an embodiment of one of the gaming terminals shown schematically in Fig. 1 and FIGs. 4A and 4B;
Fig. 8 is a flowchart of an embodiment of a main routine that may be performed during operation of one or more of the gaming terminals;
FIG. 9 is an exemplary visual display that may be displayed during performance of a slot routine; and
FIG. 10 is a flowchart of an embodiment of the slot routine that may be performed by one or more of the gaming terminals.

### DETAILED DESCRIPTION OF THE INVENTION EMBODIMENTS

The description of the preferred examples is to be construed as exemplary only and does not describe every possible embodiment of the invention. Numerous alternative embodiments could be implemented, using either current technology or technology developed after the filing date of this patent, which would still fall within the scope of the claims defining the inventive subject matter.

Advances in network technologies (e.g., the World Wide Web, the Internet, satellite technology, cellular technology, 802.11 technology, infrared technology, etc.) coupled with advances in available software architectures have provided a fertile ground for development of new gaming system environments: gaming system environments that may or may not include the limitations typically associatcd with dedicated communication networks.

New gaming system environments, not limited wholly by dedicated communication networks, may use public communication networks such as, for example, the Internet, and may therefore be vulnerable to unauthorized manipulation from any access point within the gaming system environment via many different methods. For example, unauthorized software, hardware, and/or firmware manipulation of gaming devices may be accomplished via public communication network access (e.g., URL hacking, manipulation via packet inserting, packet sniffing, IP spoofing, DNS table spoofing, denial-of-service attacks, distributed denial-of-service attacks, exploitable URLs and other application level attacks, etc.), via local area network access (e.g., manipulation via password sniffing, DNS table spoofing, common gateway interference hacking, etc.), or via gaming terminal or gaming server access (e.g., manipulation via a known-plaintext attack, a chosen-plaintext attack, stealing passwords, etc.). The manipulation may be the result of intentional or unintentional internal tampering (e.g., manipulation by a casino employee), or it may be the result of external tampering (e.g., by an attacker introducing a computer virus, a computer worm, a Trojan horse, etc). Obviously, unauthorized manipulation of any gaming system environment at any level will compromise the gaming industry.

In general, the present invention provides methods and apparatus for a secure gaming system environment that may include a public communication network, a private dedicated communication network, or a combination of both. The methods and apparatus are provided using a layered security approach that may substantially ensure data, software, firmware, and hardware integrity of the gaming devices and associated peripherals of the secure gaming system environment.

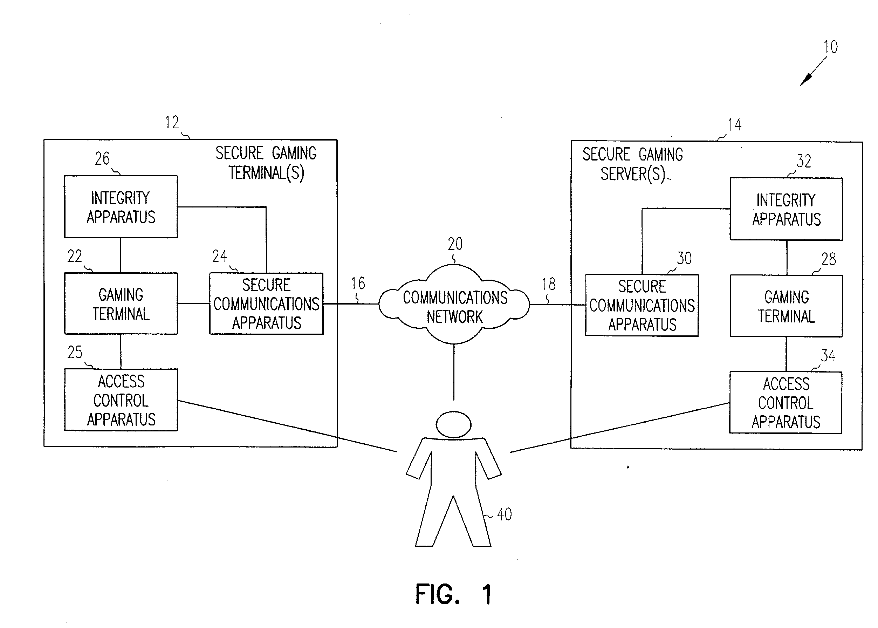

Specifically, the secure gaming system environment of FIG. 1 includes a one or more secure gaming terminals coupled via a communications network to one or more secure gaming servers. Selected ones of the secure gaming terminals may include one or more of the following: (1) a secure communication apparatus configured to provide access control at the network level to protect the gaming terminal from attacks mounted remotely via the communication network; (2) an access control apparatus configured to provide access control at the gaming terminal level to protect the gaming terminal from attacks mounted via direct contact with the gaming terminal; and (3) an integrity apparatus configured to provide access control at the network level and the gaming terminal level to protect the gaming terminal software and data from attacks mounted from any one of a number of locations. Similarly, selected ones of the secure gaming servers may include one or more of the following: (1) a secure communication apparatus; (2) an access control apparatus; and (3) an integrity apparatus.

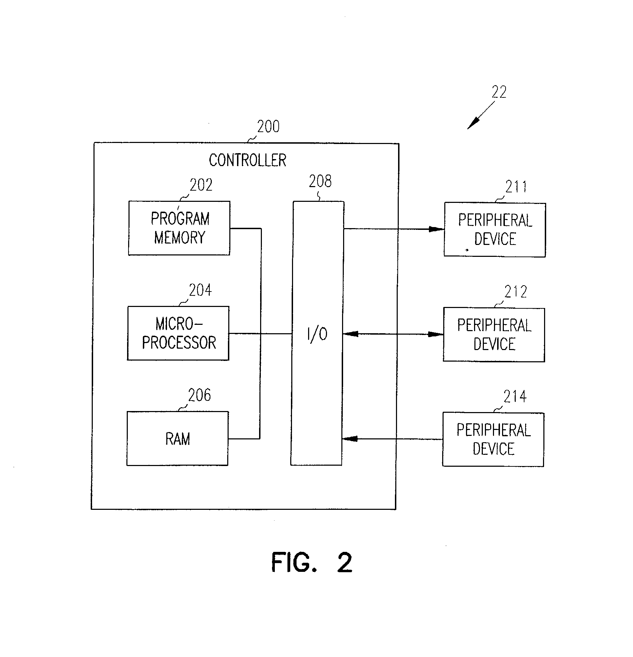

The components that may be incorporated in the gaming devices (i.e., the gaming terminals and/or the gaming servers) and the security elements (i.e., the integrity apparatus, the secure communication apparatus, and/or the access control apparatus) of secure gaming system environment are illustrated in FIG.2. The components that may be incorporated in the gaming devices or security elements illustrated by FIG. 2 are configured to enable execution of a number of routines (e.g., software programs).

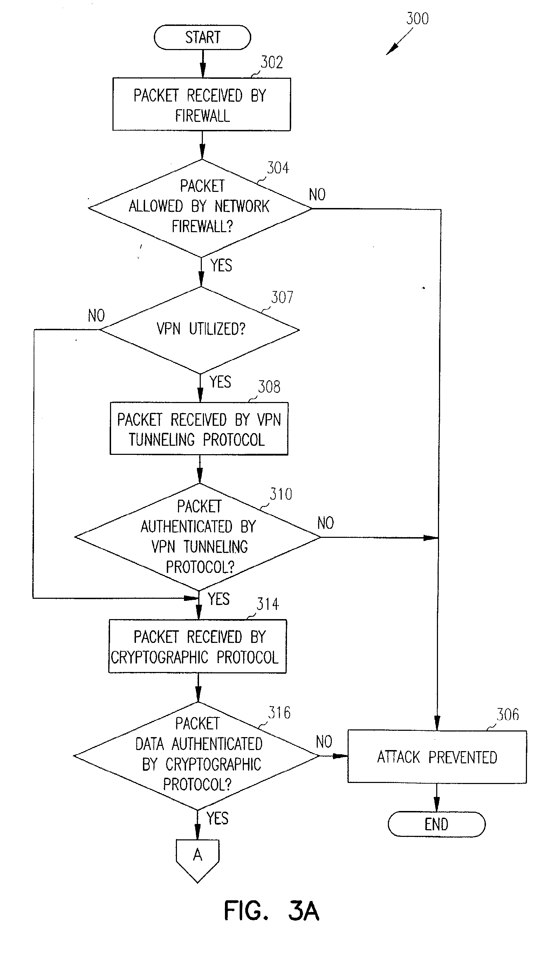

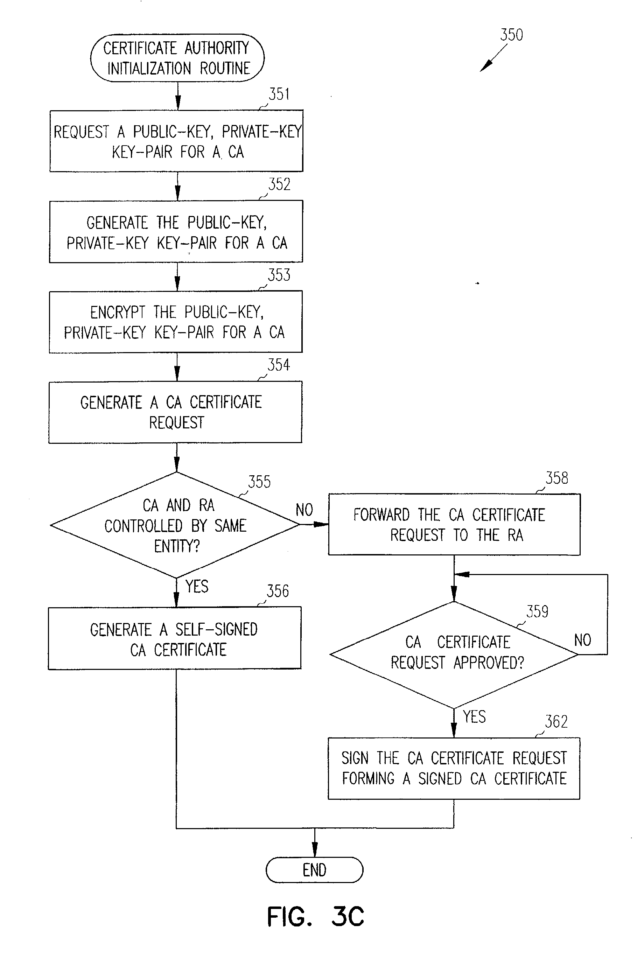

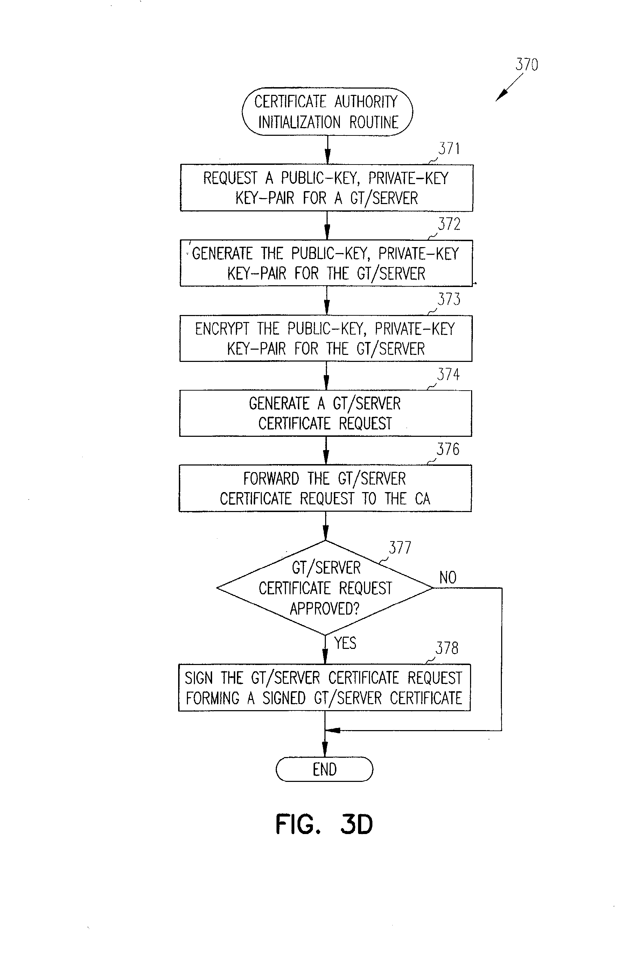

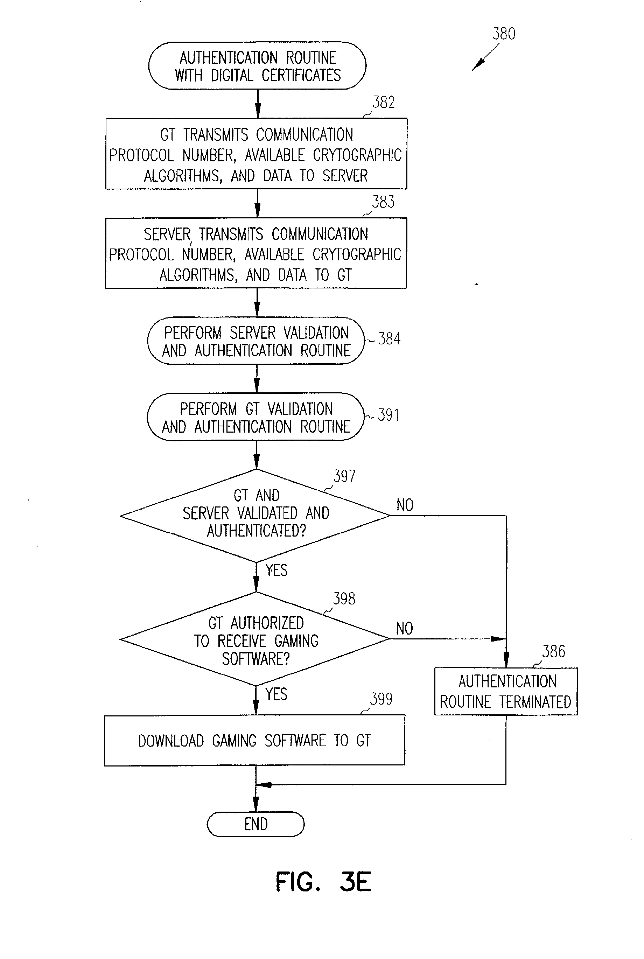

Flowcharts representing embodiments of routines executed by the components of the gaming devices and security elements are illustrated in FIGs. 3A, 3B, 3C, 3D, 3E, 3F, 3G, 5 and 6. For example, FIGs. 3A-3B illustrates a security routine, FIG. 3C illustrates a certification authority initialization routine, FIG. 3D illustrates a key generation and signing routine, and FIGs. 3E-3G illustrates an authentication routine using the digital certificates and key generated by the certification authority initialization routine and the key generation and signing routine of FIGs. 3C and 3D.

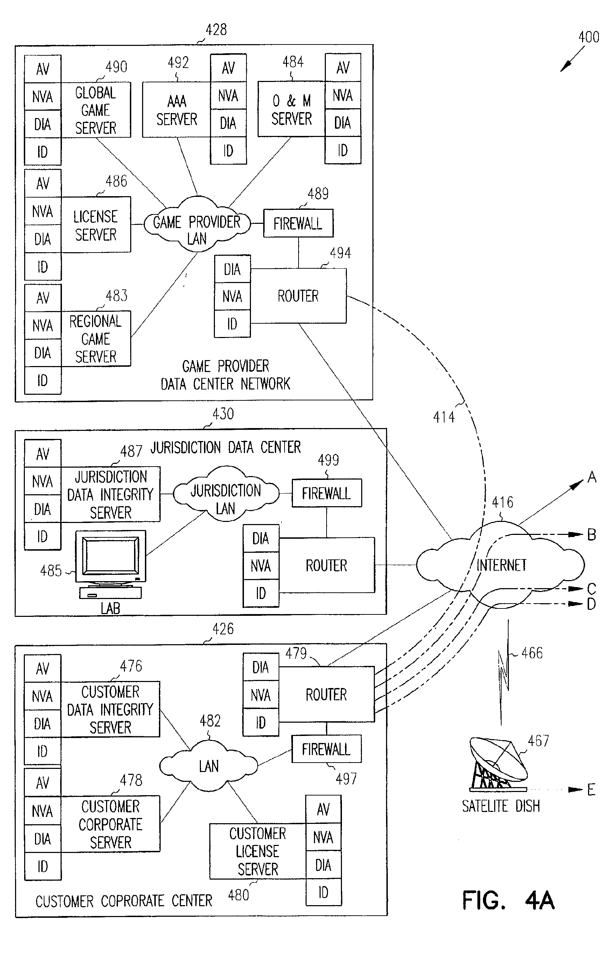

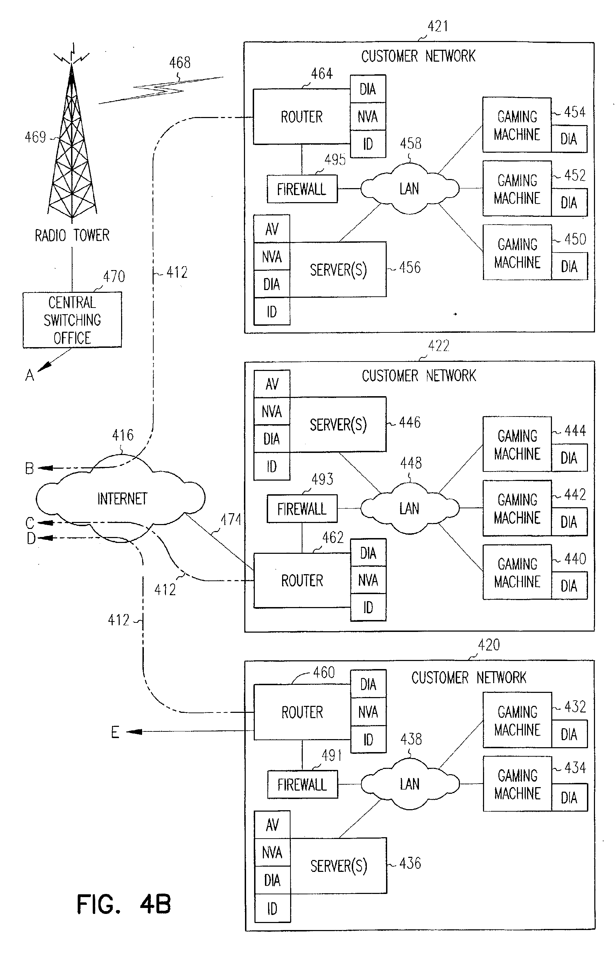

The more detailed secure gaming system shown in FIGs. 4A and 4B incorporates a variety of networks and systems, communicatively coupled, to form a secure gaming system. Some of the networks and systems may be geographically remote from each other. For example, the detailed secure gaming system may include one or more game provider data center networks. The game provider data center networks may be implemented regionally and/or globally. The detailed secure gaming system also may include a customer corporate center coupled to one or more individual customer networks. Each individual customer network may be located in one gaming establishment such as one casino or may be located in many gaming establishments such as a number of casinos, boats, etc. One or more jurisdiction data centers also may be provided to perform jurisdiction regulation and approval functions. In addition, each of the networks and systems of the detailed secure gaming system may incorporate one or more of security elements discussed in connection with FIG.1.

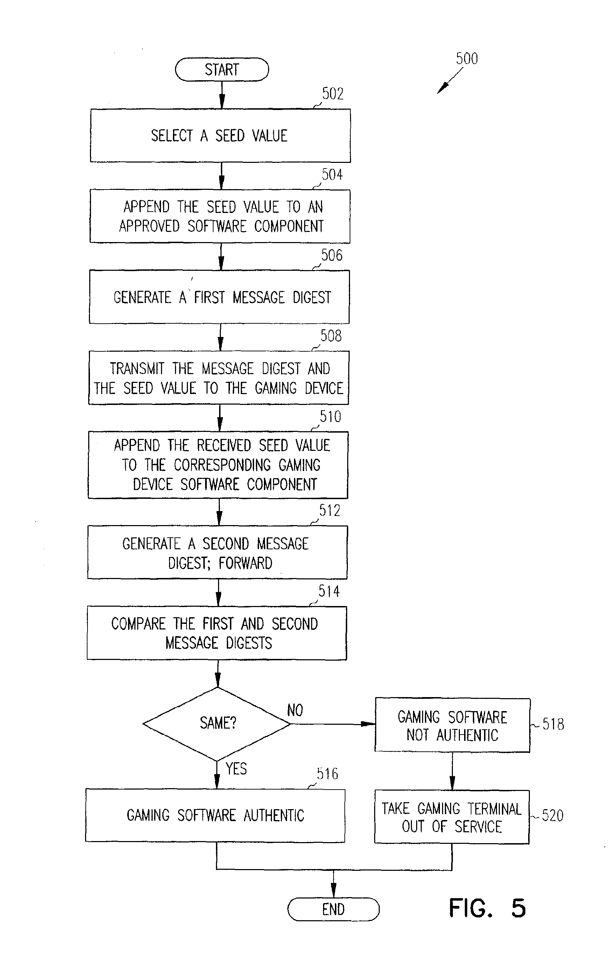

FIG. 5 illustrates an authentication routine that may be performed by one or more of the servers of the jurisdiction data center illustrated in FIGs. 4A and 4B. Utilization of the authentication routine enables local or remote authentication/verification of designated gaming software and/or data residing in any of the gaming devices of the detailed secure gaming system of FIGs. 4A and 4B.

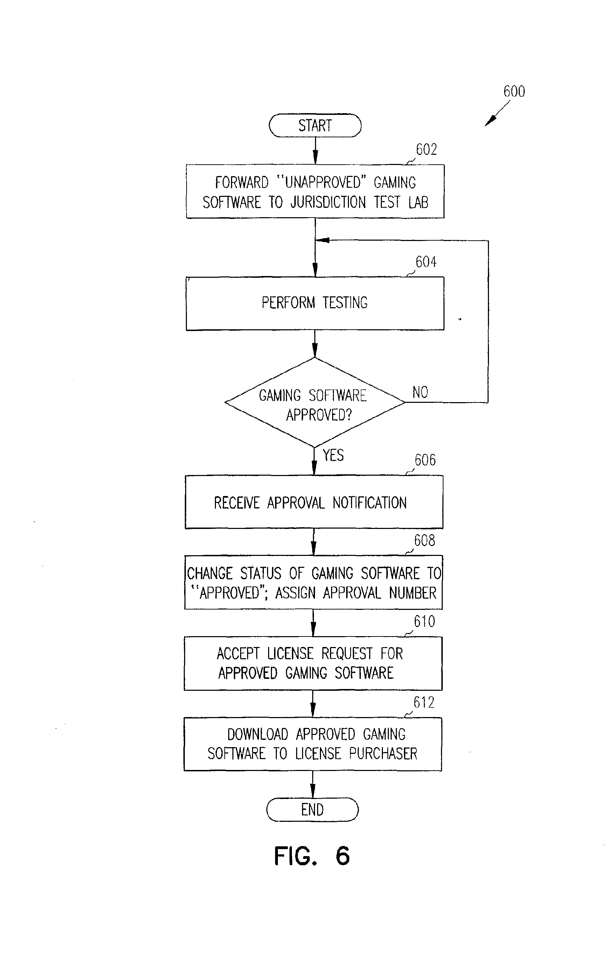

Similarly, FIG. 6 is an example embodiment of a gaming software approval and distribution routine that may be performed by the gaming devices and security elements of FIGs. 4A and 4B. Specifically, FIG. 6 illustrates the steps that may be executed by one or more servers of the game provider data center network when attempting to gain jurisdictional approval of unapproved software prior to licensing and distribution to a customer. Both of the routines illustrated in FIG. 5 and FIG. 6 may utilize one or more of the security elements discussed in connection with FIG. 1.

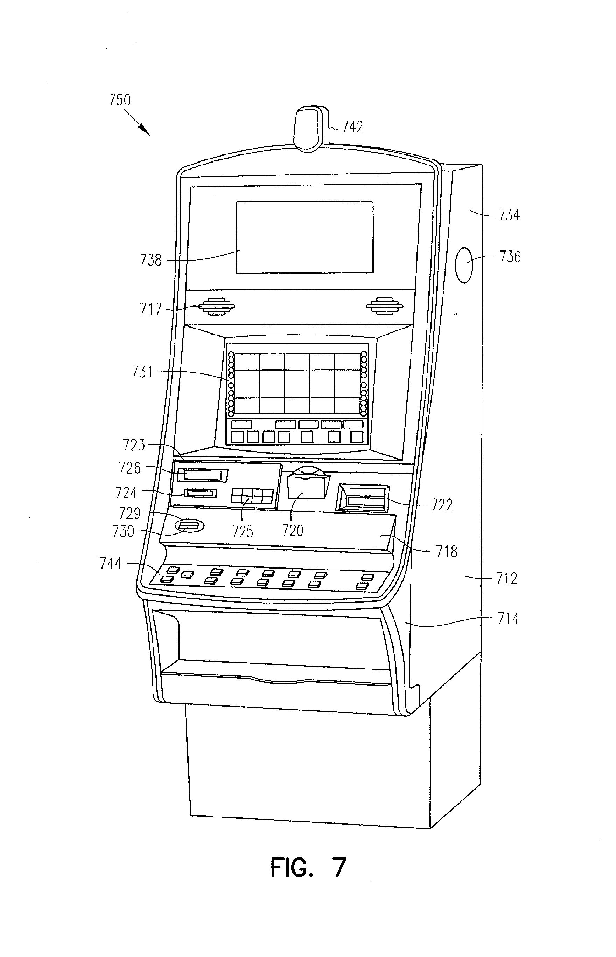

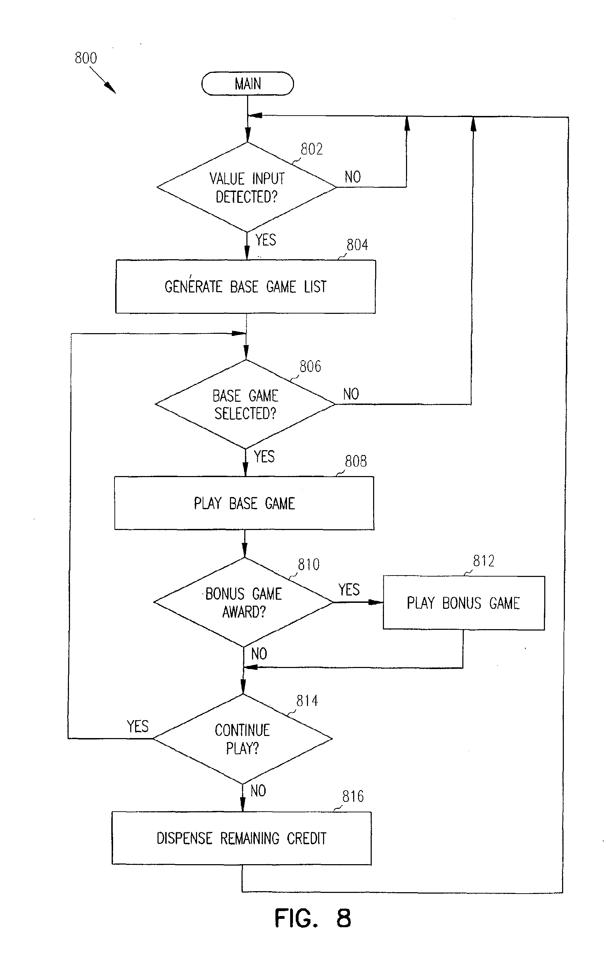

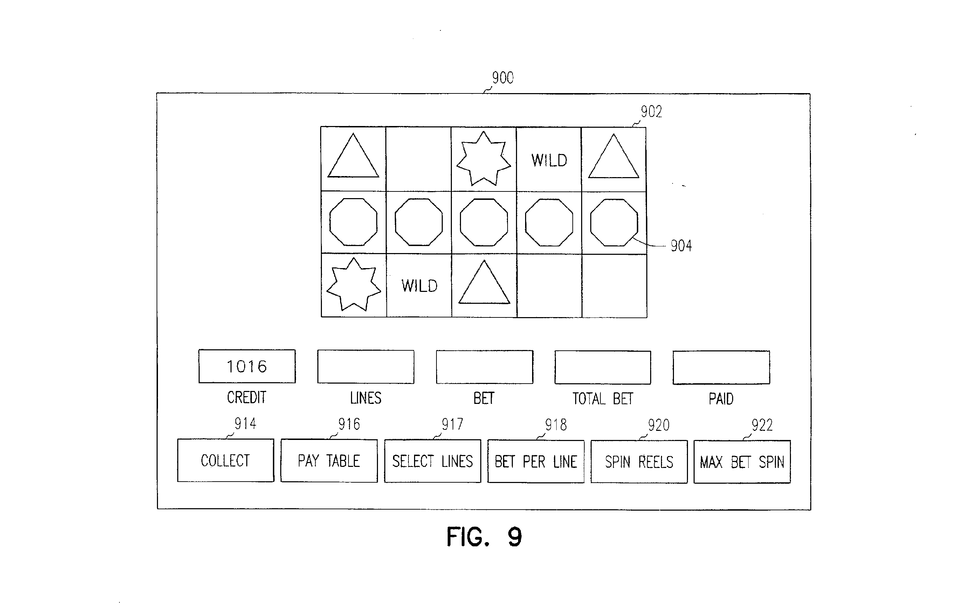

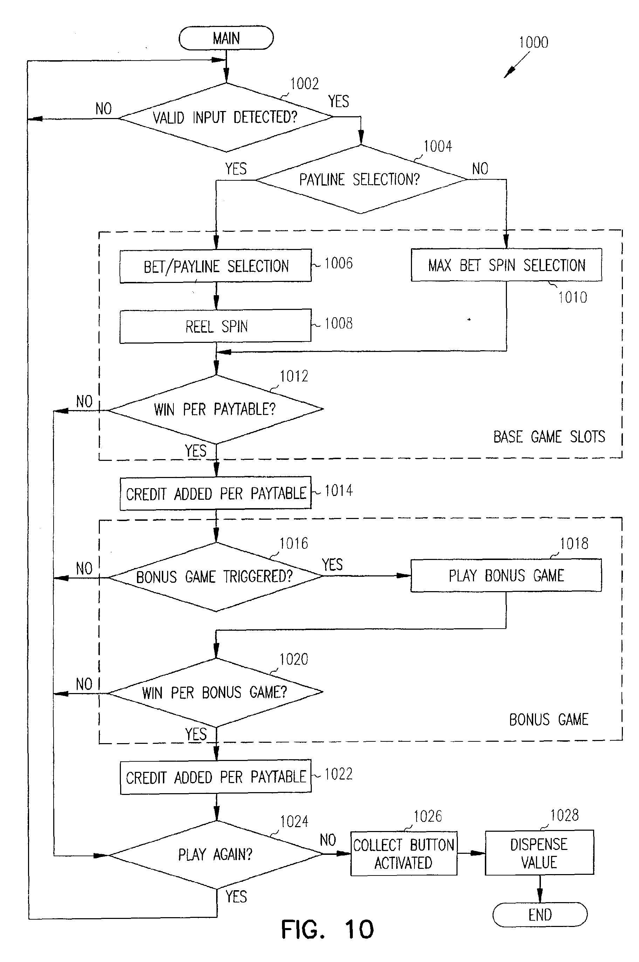

Fig. 7 is an exemplary gaming terminal that may be used in either the secure gaming system environment of FIG. 1 or the detailed secure gaming system of FIGs. 4A and 4B. An exemplary gaming routine that may be performed by components (FIG. 2) of the exemplary gaming terminal of FIG. 7 is illustrated in FIG. 8. The exemplary gaming routine includes a base game such as a slot game, a bingo game, etc., and a bonus game such as Monopoly. For example, an exemplary slot game that may be performed by the exemplary gaming terminal is illustrated in FIG. 9 and an exemplary visual display associated with the slot game is illustrated in FIG. 10.

### I. THE SECURE GAMING SYSTEM NETWORK

FIG. 1 is a block diagram of a secure gaming system environment 10 in accordance with an embodiment of the invention. As used herein, the term "secure gaming system" is defined to include all manner of securing a computer-based gaming system or network environment including utilizing, for example, secure hardware; perimeter defenses such as firewalls, anti-virus software and anti-virus scanners (AV); two factor authentication (to gain access); authentication of gaming software before and after installation including "on demand" authentication; authentication, authorization, and accounting of the gaming sessions; data integrity assurance (DIA) of designated software files in the gaming devices of the secure gaming system environment 10 including gaming devices at the network level, the server level and the gaming terminal level; gaming software vulnerability assessment (VA); network VA using network-based scanners and host-based scanners; security information management methods including security policy implementation, security teams (e.g., CSIRTs), security reports, incident response, etc.; and proactive and reactive intrusion detection (ID) systems.

Referring to FIG. 1, the secure gaming system environment 10 includes one or more secure gaming terminal(s) 12 and one or more secure server(s) 14 interconnected via links 16 and 18, respectively, to a communications network 20. The communications network 20 may be a public communications network, for example, the Internet, or it may be a dedicated private network, for example, an intranet.

A secure gaming terminal 12 includes, in one embodiment, a gaming terminal 22 and one or more of the following security elements: a first secure communication apparatus 24 communicatively coupled to the gaming terminal 22 and the communication network 20; a first integrity apparatus 26 communicatively coupled to the gaming terminal 22; and a first access control apparatus 25 communicatively coupled to the gaming terminal 22. Similarly, a secure gaming server 14 includes, in one embodiment, a gaming server 28 and one or more of the following security elements: a second secure communication apparatus 30 communicatively coupled to the gaming server 28 and the communication network 20; a second integrity apparatus 32 communicatively coupled to the gaming server 28; and a second access control apparatus 34 communicatively coupled to the gaming server 28. As used herein, the term "security element" refers to any of the first and second security communication apparatus 24, 30, the first and second access control apparatus 25, 34, and the first and second integrity apparatus 26, 32. In addition, the first and second security communication apparatus 24, 30, the first and second access control apparatus 25, 34, and the first and second integrity apparatus 26, 32 may be implemented as hardware, software, or a combination of both.

Although FIG. 1 depicts one secure gaming terminal 12 and one secure server gaming server 14, the secure gaming system environment 10 may have any number of secure gaming terminals forming a group of secure gaming terminals. The group of secure gaming terminals may be communicatively coupled to one or more secure gaming servers 14 to provide a gaming network. The gaming network may be interconnected via a number of suitable network data links or bus (discussed in connection with FIGs. 4A and 4B). Moreover, one or more individual gaming networks may be linked together via a wide area network (WAN) or a local area network (LAN), depending on the desired configuration.

Gaming environment security may be addressed in terms of prevention and/or detection of unauthorized actions by users of the secure gaming system network 10. The unauthorized actions may be the result of physical intrusions by a person 40, or software intrusions caused by the person 40. Thus, the first and second secure communication apparatus 24, 30, the first and second access control apparatus 25, 34, and the first and second integrity apparatus 26, 32 are configured to provide multiple levels of access control to the secure gaming system environment 10, in one embodiment, thereby preventing unauthorized actions by person(s) such as person 40.

In one embodiment, the multiple levels of access control to the secure gaming system environment 10 have three aspects: confidentiality, mtegrity, and availability. The confidentiality aspect prevents unauthorized users (e.g., person 40) from accessing sensitive information via the gaming terminal(s) 22 or the gaming server(s) 28, or even via the communication network 20. The integrity aspect has two components, in one embodiment: data integrity, which ensures that data associated with the gaming terminal(s) 20 and gaming server(s) 28 has not been deleted or altered by a person without permission; and software integrity which ensures that the software programs residing in the gaming terminal(s) 20 and gaming server(s) 28 have not been altered by error, a malicious user, or a virus. The availability aspect ensures that a malicious user (e.g., an attacker) cannot prevent legitimate users (e.g., a casino technician) from having required access to the gaming terminal(s) 22 and gaming server(s) 28.

Access control breaches, or security breaches, may occur as a result of unintentional system misconfiguration due to gaming software or data updates, unauthorized access to any aspect of the gaming terminal(s) 22 or the gaming server(s) 28 by an internal user (i.e., internal system misuse), or unauthorized access to any aspect of the gaming terminal(s) 22 or the gaming server(s) 28 by an outside attacker/hacker. Thus, as used herein, the term "access control" refers to limiting: (1) access to gaming terminal's or server's software and/or data by a person; (2) access to gaming terminal's or server's hardware, peripherals, database, memory, etc, by a person; (3) access to gaming terminal's or server's software by a computer program initiated by a user; and (4) access to gaming terminal's or server's hardware, peripherals, database, etc., by a computer program initiated by a user.

### Ia. Secure Communication Apparatus

The first and second secure communication apparatus 24, 30, providing access control at a network level, enables secure communication between and among the gaming devices (e.g., the gaming terminal(s) 22 and the gaming server(s) 28). The first and second secure communication apparatus 24, 30 include one or more secure communication elements, including but not limited to those discussed herein, for providing network access control. For example, in one embodiment, the first and second secure communication apparatus 24, 30 include virtual private network (VPN) application software, one or more firewalls, VPN tunneling protocols, and cryptographic methods/protocols such as encryption/decryption protocols. Although included in the first and second secure communication apparatus 24, 30, it will be appreciated by those of ordinary skill in the art that VPN application software, VPN tunneling protocols, and cryptographic protocols may also be included in the gaming terminal(s) 22, the gaming server(s) 28, or another security element of the secure gaming system environment 10.

### a_{(1).} VPN Application Software

As previously mentioned, the communication network 20 may be a public communications network or a dedicated private network. If the communication network 20 includes a public network (i.e., the Internet), VPN application software may be utilized to provide a substantially secure VPN connection between and among the secure gaming terminal(s) 12 and the secure server(s) 14. The secure VPN connection may be viewed as a secure communication "pipe" passing through an unsecured public communication environment. Use of a VPN connection (e.g., virtual private dial networks, virtual private routed networks, virtual leased lines, etc.) may partially or wholly reduce the need for costly dedicated communication networks (e.g., dedicated leased or owned private lines) between and/or among the various gaming devices of a gaming system.

### a_{(2).} VPN Tunneling Protocols

Secure access within the VPNs may be maintained using one of any number of tunneling protocols. These tunneling protocols include cryptographic protocols such as IPsec, point-to-point tunneling protocol (PPTP), layer two tunneling protocol (L2TP), secure shell (SSH), proprietary protocols, etc. These tunneling protocols may also include future Internet protocols developed under the auspices of the Internet Engineering Task Force (IETF) and others to encapsulate gaming software/data traversing the communication network 20. Fundamentally, tunneling protocols send packetized encrypted gaming data to and from the gaming terminal(s) 22 and gaming server(s)28 through a "tunnel" that is considered secure; the tunnel cannot be entered by data that is not properly encrypted. In addition to using VPN tunneling protocols, a number of other security measures (discussed below) can be implemented to ensure the integrity of gaming data traversing the communication network 20.

The gaming data may include new or modified gaming software for game play, bonus game play, tournament play, progressive lottery game play, etc., on the gaming terminal(s) 22. The gaming data may also include gaming terminal game performance data, maintenance information or instructions, security data, maintenance data, player data, accounting data, electronic fund transfer (EFT) data, wagering account transfer data, game play information such as selection of game, bet, etc., electronic transfer of funds to/from secure server(s) 14, game outcomes (for systems having central determination), gaming device software (OS, peripherals, etc.), etc.

The communication network 20 may also include one or more dedicated communication network segments configured as an intranet. An intranet may be desirable if, for example, a large gaming proprietor wishes to link gaming devices within a casino or between two or more casinos. The intranet may be configured to enable downloading of (software) games, game configuration data, game outcomes, game play, etc. from the gaming server(s) 28 to the gaming terminal(s) 22, and to enable uploading of marketing and operations data (i.e., security, accounting, and configuration data) from the gaming terminals(s) 22 to the gaming server(s) 28. The gaming server(s) 28 and the gaming terminal(s) 22 may be further interconnected via private leased phone lines, private microwave or satellite links, dedicated hardwire, wireless links, etc.

### a_{(3).} Firewalls

Each of the first and second secure communication apparatus 24, 30, may include a firewall. As is known, firewalls operate much like a router, except that firewalls have additional functionality to protect the gaming device(s) 22 and the gaming server(s) 28 from "intruder data packets". Such intruder data packets may originate from a hacker's computer somewhere within the communication network 20. The hacker (e.g., person 40) may be attempting any number of types of attacks of the gaming system environment including: URL hacking in the case of Internet gaming where the application layer is exploited via worms, viruses, Trojan horses, logic bombs, scumware, spyware; packet sniffing to steal user names and pass codes; IP spoofing where a data packet sent by the hacker and purporting to come from a trusted computer is accepted by a gaming server or terminal; DNS table spoofing where the domain name service routing tables are compromised; denial-of-service attacks and distributed denial-of-service attacks where one or more gaming terminals or servers are crashed by data flooding; etc.

At the simplest level, a firewall uses a consistent rule set (implementing packet filtering) to test incoming network traffic, and then allows passage of network traffic (e.g., open systems interconnection (OSI) model data packets) that meets the rule set. Network traffic that does not meet the rule set is dropped. More sophisticated firewalls keep information about the state of the network and what types of data packets are expected, rather than looking at individual packets (i.e., a dynamic packet filter or a "stateful inspection" where some packets are intercepted at the network layer, and then data is extracted to perform OSI layer 4-7 inspections). In other words, a firewall included in the first secure communication apparatus 24 provides a perimeter boundary between the gaming terminal 22 and the communication network 20. Similarly, a firewall included in the second secure communication apparatus 30 provides a perimeter boundary between the gaming server 28 and the communication network 20. In addition, firewalls included in the first and second secure communication apparatus 24, 30 may be configured differently or the same, depending on the security threshold required for incoming packets to the gaming terminal 22 and the gaming server 28, respectively. Firewalls may also be installed directly in the gaming terminal(s) 22 and the gaming server(s) 28 or any of the security elements of the secure gaming system network 10.

More than one firewall may be used with the first secure communication apparatus 24. For example, two logical firewalls may be used to build a safety buffer zone around the gaming terminal(s) 22. The buffer zone (DMZ) may be used to isolate a Web server placed between the secure gaming terminal(s) 22 and the communication network 20 from the gaming terminal(s) 22. One firewall may be used to protect the buffer zone itself (i.e., placed between the Web server and the communication network 20), while a second firewall is configured with more restrictions and placed interior to the first (i.e., placed between the Web server and the gaming terminal(s) 22).

The firewalls used in the secure gaming system environment 10 may be implemented via traditional router-based firewalls, software-based firewalls using CPUs (i.e., for classic data and file processing), application specific integrated circuits (ASIC), and network processors (i.e., for continuous processing of packet streams, instead of chunks of file/data processed with discrete operations). The firewalls may also be implemented via programmable network processors to inspect OSI layer 7 packets at gigabit speeds, for example, the ES-1000 switch available from Transtech Networks, Inc. (Oakland, CA). In addition, the firewalls may be implemented using an adaptive computing integrated circuit technology such as the adaptive computing integrated circuit available from QuickSilver Technology (San Jose, CA).

### a_{(4).} Cryptographic Methods/Protocols

Each of the first and second secure communication apparatus 24, 30 may include application of one or more cryptographic methods to ensure integrity of gaming data transmitted via the communication network 20. Such cryptographic methods applied by the first and second secure communication apparatus 24, 30 include (1) message authentication codes (MACs) (i.e., a randomly generated number appended to a digital message which has to be matched at the receiving end in order to authenticate the digital message) used to ensure that the game software packets were not modified during transmission; (2) one-way hash algorithms for authentication such as secure hash algorithm (SHA-1-secure hash algorithm) that serve as "digital fingerprints" (i.e., small pieces of data that can serve to identify much larger digital objects); (3) public-key cryptography (e.g., RSA-public-key algorithm for both encryption and authentication, ElGamal, and elliptical curves); (4) digital signature schemes using public-private key-pairs (e.g., RSA, digital signature algorithm-DSA, ElGamal signatures); (5) symmetric encryption (e.g., Triple-DES, AES, Algorithm X, etc.); (6) random number generators to generate random numbers for session keys and unique values used in various protocols; (7) protocols using more than one of the above-mentioned authentication techniques; and so on.

As will be appreciated by those of ordinary skill in the art, the first and second secure communication apparatus 24, 30 may be configured to include any combination of the VPN application software, firewalls, VPN tunneling protocols, and cryptographic methods discussed above, to provide secure communication within the secure gaming system environment 10. Thus, the configuration of first and second secure communication apparatus 24, 30 may be different, or may be identical.

### Ib. Access Control Apparatus

The first access control apparatus 25 and the second access control apparatus 34 provide access control at the gaming device level. The first access control apparatus 25 prevents unauthorized access to the gaming terminal(s) 22 by a person 40. Similarly, the second access control apparatus 34 prevents unauthorized access to the gaming server(s) 28 by the person 40.

The first and second control apparatus 25, 34 include one or more access control elements, including but not limited to those discussed herein, for providing access control at the gaming device level. For example, in one embodiment, the first and second control apparatus 25, 34 include methods/protocols for authenticating a person and authenticating software attempting access to any aspect of the gaming terminal(s) 12 or the gaming server(s) 14. The first and second control apparatus 25, 34 also include authorization and accounting methods/protocols.

### b₍₁₎. Authentication, Authorization, Accounting

Methods to control access at the gaming device level (e.g., the gaming terminal 22 and the gaming server 28) may not be effective unless and until identification and authentication of the person 40 (or computer program initiated by the person 40) attempting access is properly completed. One or more methods/protocols for authenticating a person accessing software, peripherals, memory, etc, of the gaming terminal(s) and server(s) of the secure gaming system environment 10 may be included in the first and second access control apparatus 25, 34. These methods/protocols include, but are not limited to, (1) requiring the use of usernames and passwords (or hashed passwords), (2) requiring use of a biometric identifier (e.g., handwriting, voiceprints, face recognition, fingerprints, hand geometry, typing patterns, retinal scans, iris scans, signature geometry, etc.), (3) requiring use of access tokens (e.g., a token is inserted in a slot in the gaming terminal(s) or server(s)), (4) requiring a user to enter a time-based number (e.g., SecurID authenticator token) on a keypad of the gaming terminal, (5) gaming device specific firewalls, or (6) monitoring a time the user gains access to software, peripherals, memory, etc, of the gaming terminal(s) 22 and server(s) 28 and, based on that time, determining if the access is/was appropriate. In addition to those listed above, combinations of methods/protocols may be also be used by the first and second access control apparatus 25, 34 (e.g., performing a SHA-1 hash of a digital representation of a fingerprint).

For example, the SecurID is a token-based two-factor user authentication technology developed by RSA to take advantage of the industry standard AES algorithm. Used in conjunction with an RSA gaming server (configured as an RSA ACE/Server and a Policy Server), the SecurID functions like an ATM card for the secure gaming network environment 10. The SecurID requires a user (i.e., a casino attendant) to identify himself with two unique factors (i.e., something he knows and something he has) before he is granted access to any of the gaming devices or peripherals of the secure gaming network environment 10. Each SecurID has a unique symmetric key that is combined with a powerful algorithm to generate a new code, or number every 60 seconds. The user then combines this number with a secret PIN to log into gaming device (i.e., the gaming terminal or the server). Only the RSA gaming server, utilizing RSA ACE/Server software, knows which number is valid at that moment in time for that user/SecurID combination.

The RSA gaming server may be additionally configured with policy information that permits a user to access the gaming devices or communication network during specified hours. In addition, some users (casino employees) may be given greater access rights than others. For example, a casino attendant may be required to use a special attendant key to gain access to an Administrator screen. The Administrator screen may then require the casino attendant to enter the username and SecurID passcode prior to gaining physical access to a gaming device. Thus, before the casino attendant is permitted entry to open a gaming terminal door or to change any configuration in the gaming terminal, etc., he/she must be authenticated using the issued SecurID token. Upon authentication, the gaming terminal will communicate with the RSA gaming server, utilizing RSA ACE/Server software (i.e., the Policy Server) before allowing the attendant to proceed with opening the main door, emptying the bill acceptor, etc. In this way two-factor authentication using the SecurID provide restricted physical access to the gaming devices of the secure gaming system environment 10

In addition to access control, these methods/protocols may also be used to determine an authorization level or access level of a person properly accessing the gaming terminal(s) or server(s). For example, an access token in conjunction with a passcode may allow a casino technician to gain access to a coin hopper in the gaming terminal 22, but not to the gaming terminal software. As will be appreciated by those of ordinary skill in the art, overall administration of authentication and authorization methods/protocols may also be performed by any gaming device of the secure gaming system network 10.

As will also be appreciated by those of ordinary skill in the art, the first and second secure access control apparatus 25, 34 may be configured to include any combination of the authentication, authorization, and accounting methods discussed above, thereby providing secure access to the gaming devices of the secure gaming system environment 10. Thus, the configuration of the first and second secure access control apparatus 25, 34 may be different, or may be identical.

### Ic. Integrity Apparatus

The first and second integrity apparatus 26, 32 provide access control at both the gaming device level and network level, and ensure integrity of the gaming software and gaming data within the gaming devices of the secure gaming system network 10. Each of the first and second integrity apparatus 26, 32 may include one or more integrity elements. The integrity elements may include antiviral software, antiviral scanners, an intrusion detection system, a data integrity system or methods, incident response methods/protocols to assess damage and restore systems, security information management protocols (including security response teams), vulnerability assessment methods/protocols, and one or more authentication methods/protocols (cryptographic methods) discussed above.

### c₍₁₎. Authenticating Received or Residing Gaming Software/Data

Methods provided by the first and second integrity apparatus 26, 32 for ensuring integrity, authentication, and non-repudiation of gaming software programs attempting access to the gaming devices of the secure gaming system environment 10 may include using one or more of the individual authentication protocols discussed in connection with the first and second secure communication apparatus 24, 30, for example, MACs, one-way hash algorithms, public-key cryptography, digital signature schemes (e.g., code signing), symmetric encryption, session keys (i.e., a key that is used for only one communication session between the gaming devices), and random number generators. Similarly, in addition to proving confidentiality, the methods provided by the first and second integrity apparatus 26, 32 for ensuring integrity, authentication, and non-repudiation of computer programs residing in the gaming devices of the secure gaming system network 10 may include using one or more of the individual authentication protocols discussed above. For example, authentication protocols provided by the first and second integrity apparatus 26, 32 may be used prevent known-plaintext attacks (i.e., attempts by an attacker to recover the encryption key when the attacker has a copy of the plaintext and the cipher text) and chosen-plaintext attacks (i.e., attempts by an attacker to recover the encryption key when the attacker chooses the message to be encrypted) against gaming software or data installed in the gaming devices.

### c_{(2).} Antivirus Software and Scanners

Controlling access to the gaming devices of the secure gaming system environment 10 by the first and second integrity apparatus 26, 32 also include preventing malicious software from accessing the gaming terminals and associated gaming software. Malicious software as defined herein includes all manner of "malware" including viruses that may be a file infector virus, a boot-sector infector virus, and a macro virus that infect gaming data, Trojan horses (e.g., piece(s) of malware deliberately embedded in a "normal" piece of software to modify existing software in favor of the attacker), and worms (e.g., self replicating program(s) that corrupt and crash computers). Preventing malicious software from gaining access to the gaming devices of the secure gaming system environment 10 can be achieved using antivirus software or antivirus scanners included in the first and second integrity apparatus 26, 32. Typical antivirus software and/or scanners scan gaming software/data looking for viral code based on a database of virus footprints. When the viral code is detected, antivirus software and/or scanners disinfect the gaming software/data by removing the viral code. For unknown viruses, polymorphic viruses (which mutate with every infection), and encrypted viruses, antivirus programs that look for suspicious virus-like behavior can be utilized.

Additional security measures provided by the first and second integrity apparatus 26, 32 may be required if the gaming terminals of the secure gaming system environment are configured to accommodate mobile code such as JavaScript, Java, ActiveX, to allow on-line gaming, or to participate in sophisticated tournament gaming. Currently, Java is the only programming language specifically designed with security in mind. Java programs (e.g., applets) run within a "sandbox" that limits damage that may be caused by malicious software. Three mechanisms protect the sandbox: a byte code verifier (to ensure correct byte code format), a class loader (to determine how and when an applet can add itself to the Java environment), and a security manager (to be consulted whenever the applet attempts to do something questionable like opening a file, opening a network connection, etc.)

### c₍₃₎. Intrusion Detection System and Method

Intrusion detection methods and data integrity methods provided by the first and second integrity apparatus 26, 32 may be implemented at the gaming terminal level or at the network level. Unlike perimeter defenses that seal-off outside access to the secure gaming system environment 10, intrusion detection and data integrity methods provide assurance of the integrity of core assets (i.e., gaming software and data) within the secure gaming system environment 10. For example, intrusion detection software available from Internet Security Systems, Inc. (Atlanta, Georgia) can be installed in the gaming devices to detect intrusive network packets in the secure gaming system environment 10. Operating much like antivirus software or antivirus scanners, one class of intrusion detection methods may provide "misuse detection" of intrusive network packets that have gained entry into the secure gaming system environment 10. That is, they scan packets looking for bit strings that signify known attacks. Another class of intrusion detection methods utilizes statistical modeling of expected gaming terminal(s) and server(s) behavior to detect intrusive network packets. This modeling includes determining "normal" operation of the gaming devices of the secure gaming system environment 10, and, then using that model, determining anomalous behavior indicating an attack or intrusion. In either case, if an intrusion is detected, appropriate steps are taken. Such appropriate steps may include one or more of the following: disabling the affected gaming devices in a fail-safe fashion (i.e., preventing a value payout), automatically generating a security alarm at an appropriate location, automatically generating an incident report that includes details of the intrusion, dispatching a security team, performing a post-mortem analysis of the intrusion that may include modification to current security measures, etc. Of course, implementing intrusion detection methods provided by the first and second integrity apparatus 26, 32 includes preventing false alarms by ensuring proper and current hardware and software configurations of the gaming devices of the secure gaming system environment 10.

Intrusion detection systems/methods do not, however, fully indicate how gaming data/software was compromised within gaming devices of the secure gaming system environment 10. Further, intrusion detection systems/methods do not know or provide a pre-attack configuration of the gaming software/data that would assist in a post-mortem analysis of the attack. Moreover, although providing after-the-fact detection of external attacks, intrusion detection systems do not look, nor provide, after-the-fact detection of internal attacks (i.e., a malicious attack or innocent security breach by a casino employee). Data integrity systems and methods may therefore be used to augment intrusion detection.

### c₍₄₎. Data Integrity System and Method

Data integrity systems and methods provided by the first and second integrity apparatus 26, 32 may be employed to detect threats or attacks to the gaming devices of the secure gaming system environment 10. For example, data integrity assurance software available from Tripwire Inc., (Portland, Oregon) can be installed in the gaming devices of the secure gaming system environment 10 to monitor gaming data and software for any deviations from an expected baseline. The data integrity assurance software may detect internal or external attacks, and therefore provides an additional layer of security.

Generally, data integrity systems provided by the first and second integrity apparatus 26, 32 provide a tool for assuring the integrity of critical or monitored items (i.e., gaming OS files) identified in the secure gaming system network 10. Such data integrity systems continually check to see what monitored files have changed, and if change is detected, to automatically isolate the problem, gather "forensic" data associated with the problem including providing a snapshot of the system at the time of the change, and enable repair of the problem with minimal downtime.

Implementing a data integrity system in the secure gaming system environment 10 is a multi-step process. Once installed in the first and second integrity apparatus 26, 32, the data integrity system creates a database of selected files (i.e., critical system files, directories, registry objects, system executables, databases, user application programs such as gaming software) in a known configuration that represents a desired good state, or baseline, of the secure gaming system environment 10. The selected files may be based on predetermined criteria selected by a gaming system administrator. Alternatively, the selected files may be predetermined, depending on jurisdictional regulations, etc. Subsequently, the data integrity system provides information on any deviations from the baseline by comparing an existing state to the baseline. The deviations may include additions, deletions, or modifications of the selected files. Any changes outside of specific pre-selected boundaries are detected, reported, etc. If the change is determined to be a valid change, the gaming system administrator can accept the change and update the baseline with the new information. If the change is not valid, remedial action described above can be taken to return the secure gaming system environment 10 to a desired state.

A changed file can be detected in a number of ways by the data integrity system. For instance, a changed file may be detected by comparing a file's inode information (i.e., structure which stores meta information about a file: size, owner, access and modification times, etc.) against values stored in the previously generated baseline. A changed file may also be detected by comparing several signatures of the file (e.g., hash digests or checksum values) calculated in such a way that it is computationally infeasible to invert. In that case, the data integrity system can be configured to scan using cryptographic signatures of file content in addition to scanning for file name changes. The data integrity system can also scan for known malicious files. In addition, the data integrity system can be configured to scan files that have been copied or downloaded to the gaming terminal(s) and server(s) to ensure that no change occurred during the transfer. Any number of criteria or combinations of criteria may be selected for detecting changes to files.

Changes outside of the specific pre-selected boundaries may be due to simple gaming software installation errors, inadvertent corruption of vital gaming system data, malicious software such as virus' or Trojan horses that managed to get through perimeter defenses, direct tampering with the gaming terminal(s) or server(s) by a game player or gaming employee, an authorized user violating gaming policy or controls, etc. Therefore, by recognizing any "drift" from the baseline and addressing it immediately, the data integrity system of the first and second integrity apparatus 26, 32 can assure the integrity of monitored items within the secure gaming system environment 10.

### c₍₅₎. Vulnerability Assessment Scanners

Vulnerability assessment scanners provided by the first and second integrity apparatus 26, 32 may be employed to determine vulnerabilities in the secure gaming system network 10. Vulnerability scanners are software tools that are configured to protect the secure gaming system network 10 against non-predictable attacks. They check settings of the gaming devices and determine whether the settings are consistent with a pre-selected gaming security policy. They identify "holes" or vulnerabilities in the secure gaming system environment 10 that could be exploited by an attacker. Thus, vulnerability assessment scanners provided by the first and second integrity apparatus 26, 32 simulate the behavior of an attacker to identify vulnerabilities in the secure gaming system environment 10, thereby enabling proactive security measures to be taken.

### c₍₆₎. Incident Response

Incident response methods/protocols that assess damage and restore affected devices of the secure gaming system environment 10 are provided by the first and second integrity apparatus 26, 32. Such incident response methods/protocols may employ known security information management techniques or may employ security information management techniques tailored for the gaming environment.

For example, upon notification by the data integrity system of the first and second integrity apparatus 26, 32, an incident response team of people may respond to a non-valid change in a monitored file by (1) gathering the forensic data (audit logs) associated with the breach, either manually or automatically, and, if required, (2) ensuring safe failure (fail-safe) or shut-down of the affected gaming device, either automatically or manually.

In the case of the secure gaming terminal 12, detection of corrupt data (i.e., a non-valid change) in a system RAM by the first integrity apparatus 26 may result in automatic suspension of operation of the gaming terminal 22. Similarly, detection of corrupt data on a storage medium by the first integrity apparatus 26 may result in automatic suspension of operation of gaming terminal 22. Audit logs, automatically generated to provide data regarding the detected non-valid change, my be generated by the gaming terminal 22, the integrity apparatus 26, one or more servers such as the secure gaming server 14, or any other suitable device within the secure gaming system environment 10. Concurrently, notification of the detected non-valid change to an appropriate casino employee or other suitable person may be accomplished in any one of a number of ways. For example, notification can occur via a visual notification by the gaming terminal, a wireless (e.g., a pager) or wireline communication, etc. from the integrity apparatus 26, the gaming terminal 22 or a server coupled to the gaming terminal 22.

Upon notification of the detected non-valid change, the casino employee may be dispatched to the secure gaming terminal 12. A number of manual diagnostic and repair steps may be performed by the casino employee (e.g., the casino employee initiates a gaming terminal power cycle and subsequent execution of local authentication routines). A number of automatic diagnostic and repair steps may also be performed by the integrity apparatus 26, the gaming terminal 22 or a server coupled to the gaming terminal 22. In addition, if it is determined that a new part is needed to repair the gaming terminal 22, notification of the need for the new part may be made manually by the casino employee, or may be made automatically by the integrity apparatus 26, the gaming terminal 22 or a server coupled to the gaming terminal 22. The notification may be received by an appropriate "parts department" via a wireless or wireline communication provided by the communication network 10.

Approval of the repair may be required prior to allowing the secure gaming terminal 12 to be released for play. The approval may be authorized in any one of a number of ways, depending on the configuration of the secure gaming system environment. For example, the approval may come from a casino employee at the location of the secure garning terminal 12. The approval may also come from a person within the secure gaming system environment 10, but remotely located from the secure gaming terminal 12, for example, from a jurisdictional regulator. Approval from a person other than a casino employee may be required for recovery actions including changing percentages, denominations, or clearing meter data in the gaming terminal 22.

In the case of the secure gaming server 14, detection of a non-valid change by the second integrity apparatus 32 may result in isolation of the gaming server 28 from the secure gaming system environment 10. Operation of any gaming terminals coupled to the secure gaming server 14 will continue unimpeded, however, some of the functionality provided by the server to those gaming terminals may be adversely affected for a short period of time (e.g., electronic fund transfers, ticket acceptance, and ticket printing). Therefore, if possible, the functions performed by the gaming server 28 may be seamlessly transferred to another, redundant server in the secure gaming system environment 10 as soon as the second integrity apparatus 32 detects the non-valid change.

Much like the gaming terminal scenario described in the above, notification of the detected non-valid change to an appropriate casino employee or other suitable person may be accomplished in any one of a number of ways. Similarly, as described above, a number of manual, automatic, or combination of both diagnostic and repair steps may be performed, and approval of subsequent repairs to the gaming server 28 may be required before placing the gaming server 14 back into service.

In the case of a communication failure between or among the secure gaming terminal(s)12 and the secure gaming server(s) 14, means of notification of the failure and subsequent repair of the failure may vary depending on the type of communication failure. For example, if the communication failure resulted from an inadvertently detached cable coupling a gaming terminal to a gaming server, notification of the failure using the methods discussed above may result in manual re-attachment of the cable. If required, the functions performed by the gaming server may be seamlessly transferred to another, redundant server in the secure gaming system environment 10 as soon as the second integrity apparatus 32 detects the communication failure.

Fig. 2 is a block diagram of a number of components that may be incorporated in selected ones of the gaming devices and security elements of FIG 1. Referring to Fig. 2, each of the gaming devices and security elements may include a controller 200 that may comprise a program memory 202, a microcontroller or microprocessor (MP) 204, a random-access memory (RAM) 206, and an input/output (I/O) circuit 208, all of which may be interconnected via a communications link or an address/data bus 210. It should be appreciated that although only one microprocessor 204 is shown, the controller 200 may include multiple microprocessors 204. For example, the controller 200 may include one microprocessor for low level gaming functions and another processor for higher level game functions such as some communications, security, maintenance, etc. Similarly, the memory of the controller 200 may include multiple RAMs 206 and multiple program memories 202, depending on the requirements of the gaming device. Although the I/O circuit 208 is shown as a single block, it should be appreciated that the I/O circuit 208 may include a number of different types of I/O circuits. The RAM(s) 206 and program memories 202 may be implemented as semiconductor memories, magnetically readable memories, and/or optically readable memories, etc.

Fig. 2 illustrates that multiple peripheral devices depicted as peripheral devices 211, 212, and 214 may be operatively coupled to the I/O circuit 208. Each of the peripheral devices 211, 212, 214 is coupled to the I/O circuit 208 by either a unidirectional or bidirectional, single-line or multiple-line data link, depending on the design of the component that is used. In addition, the peripheral devices 211, 212, 214 may be connected to the I/O circuit 208 via a respective direct line or conductor. Different connection schemes, including wireless connections, could be used. For example, one or more of the peripheral devices 211, 212, 214 shown in Fig. 2 may be connected to the I/O circuit 208 via a common bus or other data link that is shared by a number of components. Furthermore, some of the components may be directly connected to the microprocessor 204 without passing through the I/O circuit 208. Although three peripheral devices are depicted in FIG. 2, more or less peripheral devices may be included in FIG. 2.

A variety of different peripheral devices may be utilized in the different gaming devices and different security elements of the secure gaming system environment 10. For example, if the gaming device is a gaming server 28, the peripheral devices may include a keyboard, a graphical interface unit (GUI) display, a number of communication ports, a monitor, a printer, a modem, a tape drive, a DVD drive, a CD drive, etc. If the gaming device is a gaming terminal 22, the peripheral devices may include a control panel with buttons, a coin acceptor, a note acceptor, a card reader, a number of electro-mechanical reels, a keypad, a sound circuit driving speakers, a card reader display, a video display, etc, operatively coupled to the I/O circuit 208, either by a unidirectional or bidirectional, single-line or multiple-line data link or wireless link, depending on the design of the component that is used. If the security element is an integrity apparatus 26, 32, the peripheral devices may include a monitor, a printer, a keyboard, etc. to enable gaming security personnel to access data associated with a access control breach identified by the data integrity system.

Further, the controllers of the gaming devices and the security elements may be operatively coupled to each other in any number of suitable configurations, interconnected as discussed above.

One manner in which one or more of the gaming devices and security elements of the secure gaming system environment 10 may operate is described below in connection with a number of flowcharts which represent a number of portions or routines of one or more computer programs, that may be stored in one or more of the memories of the controller 200. The computer program(s) or portions thereof may be stored remotely, outside of the gaming devices or security elements, and may control the operation from a remote location. Such remote control may be facilitated with the use of a wireless connection or by an Internet interface that connects the gaming devices with a remote computer having a memory in which the computer program portions are stored. The computer program portions may be written in any high level language such as C, C++, C#, JAVA or the like or any low-level, assembly or machine language. By storing the computer program portions therein, various portions of the memories 202, 206 are physically and/or structurally configured in accordance with computer program instructions.

### II. ROUTINES PERFORMED BY GAMING DEVICES AND SECURITY ELEMENTS

### IIa. Security Routine

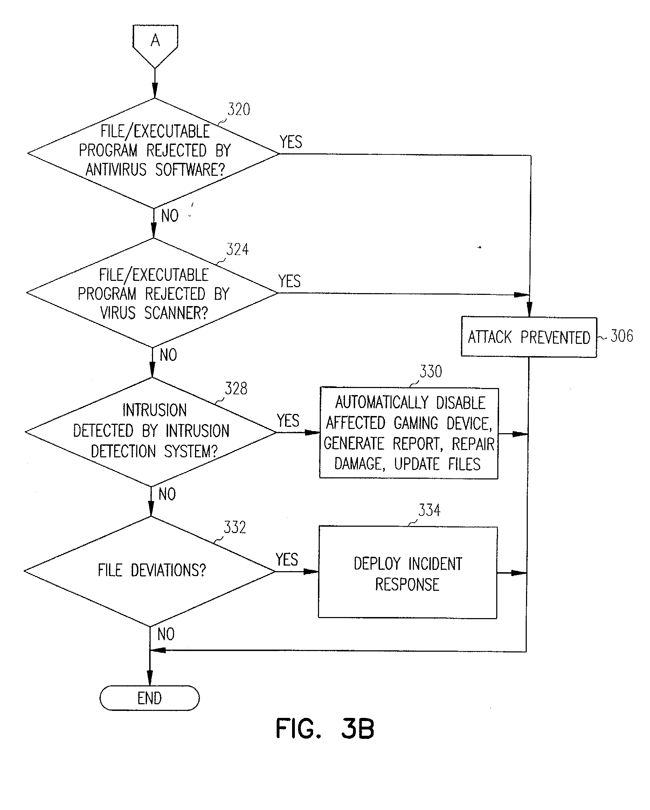

FIG. 3A-3B is a flowchart of an embodiment of a security routine that may be performed by one or more of the security elements of FIG. 1. The security routine 300 provides one example of controlling software packet access to the gaming devices of the secure gaming system environment 10. The security routine 300 may be stored in one or more of the memories of the controller 200. In the illustrated example, network level access control provided by the communication apparatus 24, 30 is discussed in connection with FIG. 3A, while network and gaming device access control provided by the integrity apparatus 26, 32 is discussed in connection with FIG. 3B. As will be appreciated by those of ordinary skill in the art, the access control methods/elements (e.g., firewalls, VPN tunneling protocols, cryptography, etc.) of the communication apparatus 24, 30 and the integrity apparatus 26, 32 discussed in connection with FIGs. 3A-3B may be provided by other apparatus within the secure gaming system environment 10.

Referring to FIG. 3A, the security routine 300 begins operation when a software data packet attempting access to the secure gaming terminal(s)12 and/or the secure gaming server(s) 14 via the communication network 20 is received by a firewall of the communication apparatus 24, 30 (block 302). The firewall, which may be implemented using one of the methods discussed in connection with FIG. 1, determines if the data packet is allowed entry (block 304). If the firewall determines that the data packet is an intruder data packet, the data packet is not allowed entry (i.e., rejected) and an attack on the secure gaming terminal(s) 12 and/or secure gaming server(s) 14 is prevented (block 306). If the firewall determines that the data packet is not an intruder data packet, the data packet is allowed entry. Optimally, an intruder data packet is always detected and rejected by a firewall. If the firewall is not properly configured or if a VPN is utilized in the communication network 20, however, an intruder data packet may be allowed to pass through the firewall.

It is determined whether a VPN is utilized at the network processing layer (block 307). If a VPN is utilized, the data packet is received by one of any number of types of VPN tunneling protocols (block 308) used to secure the VPN over the communication network 20, in one embodiment. If a VPN is not utilized (as may be the case in a dedicated private network), the data packet may be received and decrypted by one or more cryptographic protocols (block 314). If the data packet is received at the network processing layer (block 308) of the secure gaming system environment 10, the VPN tunneling protocol determines whether the data packet is authentic (block 310), in one embodiment. Authentication of the data packet may be determined using an authentication header (AH) method where the sender of the data is authenticated, or an encapsulating security payload (ESP) method where the sender of the data is authenticated and the data is encrypted. If the VPN tunneling protocol determines that the data packet is not authentic (i.e., an intruder data packet), the data packet is rejected and an attack on the secure gaming terminal(s) 12 and/or secure gaming server(s) 14 is prevented (block 306). If the VPN tunneling protocol determines that the data packet is authentic, a cryptographic protocol (block 314) provided by the integrity apparatus 26, 32 determines whether the payload data (e.g., files, executable software, etc.) in the data packet is authentic, in one embodiment. Typically, a non-authentic data packet is detected and rejected by the VPN tunneling protocol. If the VPN tunneling protocol is not properly implemented (via an inappropriate encryption algorithm, digital signature algorithm, and so forth), however, one or more non-authentic data packets may exploit the improper implementation and not be authenticated by the VPN tunneling protocol.

If utilized in the secure gaming system environment 10, a cryptographic protocol receiving the data packet (block 314) may be used to determine whether the data (payload data) carried in the data packet is authentic (block 316). Authentication may be determined using one or more of symmetric encryption, message authentication codes, public-key encryption, one way hash functions, digital signature schemes, random number generator schemes, or combinations. Moreover, the cryptographic protocol provided by the integrity apparatus 26, 32 may be provided at the OSI model network layer, at the OSI model application layer, or both. As previously mentioned, if a VPN tunneling protocol is not used, the data packet may pass directly from the firewall to application of the cryptographic protocol.

If application of the cryptographic protocol determines that the payload data is not authentic (block 316), the payload data is rejected and an attack on the secure gaming terminal(s) 12 and/or secure gaming server(s) 14 is prevented (block 306). If application of the cryptographic protocol determines that the payload data is authentic, the payload data may be received by the gaming terminal 22, the gaming server 28, or the integrity apparatus 26, 32. Non-authentic payload data may be uncovered by application of the cryptographic protocol and rejected accordingly. If cryptographic protocol is not properly implemented, however, the data packet may exploit the improper implementation and payload data may be erroneously authenticated.

Referring to FIG. 3B, in the illustrated example, the payload data received by the integrity apparatus 26, 32 is reviewed by antivirus software (block 320) and virus scanners (block 324), in one embodiment, as discussed in connection to FIG. 1. The payload data may form a file, an executable program, a script, a macro, etc. If the payload data is determined to contain a virus, it is rejected and an attack on the secure gaming terminal(s) 12 and/or secure gaming server(s) 14 is prevented (block 306).

Concurrently, in one embodiment, the payload data is subject to the intrusion detection system, implemented as a misuse detection system, a statistical modeling system, or a combination of both (block 328). If the intrusion detection system detects an intrusion attributable to the payload data (block 330), the affected gaming device is automatically disabled in a fail-safe manner, a security report is generated, and suitable action is taken (discussed above in connection with FIG. 1), in one embodiment. If the intrusion detection system does not detect an intrusion attributable to the payload data, the controller 200 may determine whether any file deviations (from a baseline) have occurred (block 332). If file deviations have occurred (block 332) indicating an invalid change, incidence response is deployed (block 334) (discussed above in connection with FIG. 1), in one embodiment. If file deviations have not occurred, the payload data is accepted as valid and authentic, in one embodiment.

Although illustrated as separate from secure gaming terminal(s) 12 and the secure gaming server(s) 14, the security functionality provided by the secure communication apparatus 24, 30 and the integrity apparatus 26, 32 may be implemented directly in secure gaming terminal(s) 12 and/or the secure gaming server(s) 14.

### IIb. Key-Based Routines For Ensuring Integrity, Authentication, and Non-repudiation

Symmetric cryptosystems that use secret keys for encryption of plaintext messages and decryption of the resulting ciphertext messages, are one type of key-based algorithm. Asymmetric cryptosystems such as public key cryptosystems and multiple-key public key cryptosystems that use public keys for encryption of plaintext messages (or digital signatures) and private keys for decryption of resulting ciphertext messages, are another type of key-based algorithm. Generally, symmetric cryptosystems provide a faster method of encryption than asymmetric cryptosystems, but asymmetric cryptosystems provide better authentication techniques. In both types of key-based algorithms, generation, management, and control (including key transmission) of secret, public, and private keys requires a level of protection equivalent to the level of protection sought for the data they encrypt because the security of the encryption/decryption algorithm rests, in part, on the key.

### One-time Session Key:

In some embodiments, a one-time session key is used for symmetric encryption and decryption of gaming software or other associated data transmitted between two or more gaming devices (e.g., from a server 28 to a gaming terminal 22). The one-time session key may be generated in a number of ways using a public-private key-pair. After generation and secure transmission, the one-time session key can be used to symmetrically decrypt/encrypt gaming software as it is transferred between the gaming devices. As the name suggests, a one-time session key is used for a short period of time, typically one session of gaming software exchanges requiring encryption and decryption.

Generation and secure distribution of the one-time session key by gaming devices of the secure gaming system environment 10 may be done using public key cryptography. For example, a first gaming device (e.g., the gaming terminal 22) transmits its public key (from a public-private key-pair) to a second gaming device, for example, the server 28. The second gaming device then generates a random one-time session key using random generation methods discussed above, and encrypts the one-time session key using the first gaming device's public key. The encrypted one-time session key is then transmitted to the first gaming device. The first gaming device then decrypts the encrypted one-time session key (using its private key from the public-private key-pair) to recover the session key. The first gaming device is now capable of symmetrically encrypting gaming software using the session key prior to transmission to the second gaming device, and vice versa.

Control of the session key, or "session key restrictions" are implemented to characterize session key parameters associated with, for example, when a session key is used, what gaming devices are authorized or required to use the session key, and how it is used. Such session key restrictions may be accomplished by attaching a key control vector (KCV) to the session key. The KCV contains the specific uses and restrictions for the particular session key. For example, hashing and XORing the KCV with a master key by the first gaming device yields a result that can be used as an encryption key to encrypt the one-time session key, in one embodiment. The resultant encrypted one-time session key may then be stored with the KCV by the first gaming device. When received by the second gaming device, the KCV can be hashed and XORed with the master key, and the result can be used to decrypt the encrypted one-time session key (i.e., to recover the one-time session key for use). The one-time session key can then be used to symmetrically encrypt and decrypt gaming software transmitted between the first and second gaming devices, in one embodiment.

### Public-private Key-pair and Secret Keys:

Private-public key-pairs used by the gaming devices of the secure gaming system environment 10 may be generated, stored, transmitted, and authenticated in any one of a number of ways, in various embodiments, depending on the scheme selected. For example, a private key (or a secret key) may be generated randomly by an automatic process (e.g., pseudo-random-bit generator) or by using techniques such as key-crunching to convert randomly selected phrases into private keys. The private key may also be generated randomly using a cryptographic algorithm such as triple-DES (DES applied three times). Similarly, the public key may be generated using a random process, however, the random process must yield keys having certain mathematical properties, for example, the key may have to be a prime number, it may have to be a quadratic residue, etc.

Once generated, secure transmission and verification of the private, public, or secret key by a gaming device of the secure gaming system environment 10, may be implemented, in one embodiment. Secure transmission of the key between gaming devices (via the communication network 20) may be accomplished through the use of a key-encryption key that encrypts the key prior to transmission. Use of the key-encryption key provides an additional layer security for the key during its transmission. However, distribution of a key-encrypting key typically is manual and therefore may not be feasible if the number of gaming devices in the secure gaming system environment 10 becomes large. For example, because every pair of gaming devices exchanges key-encryption keys, a one hundred-gaming device network may require about 4950 key-encryption key exchanges. In addition to using key-encryption keys, secure transmission of the key may also be accomplished by using a trusted courier (e.g., a casino employee), by using a digital signature protocol using a public key database, or by using a key distribution center (discussed below), depending on the cryptographic protocol used.

After receiving the key, the receiving gaming device may be required to verify the key's authenticity and source. Verification of authenticity and source may be accomplished in a variety of ways, depending on the cryptographic algorithm used and the level of security required. For example, utilization of the trusted courier, the key-encryption key, the digital signature protocol using a public key database, the one-way hash function, the key distribution center (KDC) etc., can provide different levels of assurance of authenticity and the source of the key.

A key may be stored in a number of ways, again depending on the level of security required. For example, the key may be stored on a magnetic strip card, a ROM key card, or a smart card. The user can then insert the card having the key into a suitable card reader coupled to the gaming device, thereby allowing access to the key by the gaming device. Alternatively, the key may be segmented into two halves. For example, one-half of the key may be stored on a ROM key and the other half of the key may be stored in suitable component of the gaming device (e.g., program memory). In addition, the key may also be stored in an encrypted form to provide an additional level of security. For example, an RSA private key could be encrypted with a DES key and stored on a tangible medium such as a disk.

The Public-Private Key-Pair Infrastructure:
Public keys used in public key cryptographic algorithms or in multiple-key public key cryptographic algorithms can be stored in, and verified by, a centralized public key database or registry (e.g., a KDC). A typical centralized registry system (e.g., a public key infrastructure (PKI)) utilizes a "public key certificate" in conjunction with a trusted certification authority (e.g., Verisign) and a separate registration authority to issue and manage security credentials and the public keys. The typical centralized registry system is also configured to use different industry-standard cryptographic algorithms (including RSA, DSA, MD5, SHA-1). A single public key certificate can be derived from a single certification authority or it can be derived from a series of public key certificates, with each of the series of public key certificates derived from a series of certification authority entities and linked or chained via digital signatures (discussed in connection with FIGs. 3C and 3D). In the case of a series of public key certificates derived from a series of certification authority entities, an "end entity" (i.e., the entity named in the subject field of a certificate) can identify the certification authority (i.e., the entity named in the issuer field of a certificate).
The public key certificate is a digitized certificate referred to herein as a "digital certificate" and may be viewed as an electronic passport equivalent to prove identity of associated gaming software or associated gaming data. In the secure gaming system environment 10, the trusted certificate authority and registry authority may be an existing authority body or may be a proprietary authority body operating under the sponsorship and control of an existing gaming jurisdiction body, a large casino customer body (e.g., Harrah's), a special gaming authority, etc. In addition, the secure gaming system environment 10 may include dedicated certificate servers having the centralized public key database.
Public keys and private keys may be created simultaneously by the trusted certificate authority using the same algorithm (e.g., RSA). Creation of the public and private keys may be done by a software routine such as that provided by OpenSSL software (open source software) or may be done using one of the manual routines or a combination routine as discussed above. The resulting private key may be given only to the requesting party (e.g., to the first gaming device) while the resulting public key is made publicly available (e.g., to the first and second gaming devices) as part of the digital certificate. The private key can then be used by the gaming device to decrypt received text or data, including gaming software that has been encrypted using the corresponding public key by another gaming device prior to transmission, in one embodiment. In addition to decrypting messages, the private key can also be used to encrypt a digital certificate, in one embodiment. At the receiving end, the digital certificate can then be decrypted using the corresponding public key, in one embodiment. Thus, the public key held by the receiver gaming device (e.g., the second gaming device) can be used by the sender gaming device (e.g., the first gaming device) to encrypt a message, and the receiver gaming device's private key can be used to decrypt the message, in one embodiment. Alternatively, the private key held by the sender gaming device can be used to encrypt the sender gaming device's signature, and the sender gaming device's public key can be used by the receiver gaming device to decrypt the encrypted signature (thereby authenticating the sender), in another embodiment.
As mentioned above, the public key certificate, or the digital certificate used by the gaming devices of the secure gaming system environment 10, is issued by a trusted certification authority, in one embodiment. Each digital certificate, in one embodiment, includes a copy of the certificate holder's public key (used for encrypting messages and digital signatures), a serial number, an expiration date of the key, and a digital signature of the certificate-issuing authority, so that a recipient can verify that the certificate is real. In the secure gaming system environment 10, the digital certificate holder and the recipient may be a gaming device such as the secure gaming terminal 12 or the secure gaming server 14, or a person such as a casino employee.

### b₍₁₎. Certification Authority Initialization Routine

For example, FIG. 3C is a flowchart of a certification authority initialization routine 350 that may be performed, in one embodiment, by a controller 200 of one or more of the security elements or gaming devices of FIG. 1, for example, by the controller 200 of the secure gaming server 14 configured as a certification authority (CA) server. The certification authority initialization routine 350 may be utilized when a customer, such as a casino entity (e.g., Harrah's) has control of, or manages, the certification authority (CA), the registration authority (RA), and the users (e.g., gaming devices such as gaming terminals and servers). Of course, as will be appreciated by those of ordinary skill in the art, variations of the certification authority initialization routine 350 may be utilized depending on ownership/control of the CA and RA. The certification authority initialization routine 350 may be performed by the CA server to provide a self-signed certificate (if the RA and CA are owned and controlled by the same entity, not a real "third party") or to provide an RA approved and CA signed certificate (if the RA and CA are not owned and controlled by the same entity) for use by the gaming devices of the secure gaming system environment 10.

Referring to FIG. 3C, the certification authority initialization routine 350 begins operation when a request (block 351) for a CA public-private key-pair (key-pair) is received by the CA server (i.e., request to generate an RSA key-pair for the CA). The request may be a manual request from an appropriate casino employee, may be an automated request, or may be a request from a gaming device of the secure gaming system environment 10. In response, the CA server, utilizing a certificate generation tool such as OpenSSL generates, encrypts, and stores the public-private key-pair.

For example, using a randomly generated password, the certificate generation tool generates (block 352) a key-pair. Using a cryptographic algorithm such as triple-DES that supports 168-bit encryption, with SHA-1 message authentication, the certificate generation tool encrypts (block 353) the CA key-pair. The encrypted CA key-pair is then stored in a specified file, for example in a ca.key file in the CA server (or on another secure server). An encrypted CA key-pair is now available for use with the CA digital certificate.

In response to a request to generate a CA certificate (block 354), a determination is made (block 355) whether the CA and the RA are controlled by the same entity. If so, the CA server provides self-signed CA digital certificate (block 356). The self-signed CA digital certificate is created when the CA certificate request is generated to contain the required information and when the CA certificate request is signed by the corresponding private key of the encrypted CA key-pair described above. The request may be a manual request from an appropriate casino employee, may be an automated request, or may be a request from a gaming device or security element of the secure gaming system environment 10. Returning to the illustrated example above (using OpenSSL software), in response to the request for a CA certificate, a new digital certificate is generated and signed with the private key of the encrypted CA key-pair described above (e.g., an X.509 certificate). The new CA digital certificate includes the number of days that the certificate is valid, the public key of key-pair file to be used, the country and state of origin, an organization name (e.g., a company), etc. and the filename (e.g., ca.crt) where the new digital certificate is to reside.

In cases where the CA and the RA are controlled or managed by different entities (i.e., CA controlled by casino entity and RA controlled by a jurisdiction entity), in response to a request to generate the CA certificate request (e.g., which, in this case, is the completed CA certificate just prior to signing by the CA), the unsigned CA certificate request is forwarded to the RA (block 358). Any action of approval or disapproval (due to incorrect or incomplete data, etc.) is performed by the RA. Upon approval (block 359), the RA forwards the unsigned, but RA approved CA certificate request back to the CA where it is reviewed for policy approval and finally signed (block 362). Subsequent to signing, the signed CA certificate request, referred to herein as the CA digital certificate, is forwarded to a predetermine file location (e.g., the ca.crt). The signed CA digital certificate is now available for use upon request.

### b₍₂₎. Gaming Terminal/Server Key Generation and Signing Routine

FIG. 3D is a flowchart of a gaming terminal/server key generation and signing routine 370 that, in one embodiment, may be performed by a controller 200 of one or more of the security elements or gaming devices of FIG. 1, for example by a controller 200 of the secure gaming terminal 12. Of course, as will be appreciated by those of ordinary skill in the art, variations of the gaming terminal/server key generation and signing routine 370 may be performed, depending on ownership and/or control of the signed-CA-certificate file. Thus, the gaming terminal/server key generation and signing routine 370 may be performed by one or more of the gaming devices or security elements of the secure gaming system environment 10, and result in a gaming terminal or gaming server digital certificate. During construction, the gaming terminal or server digital certificate is linked back to a CA digital certificate via the private key of the CA digital certificate to ensure its authenticity.

Referring to FIG. 3D, the gaming terminal/server key generation and signing routine 370 begins operation in response to a request (block 371) for a gaming terminal/server (GT/server) key-pair. The request may be a manual request from an appropriate casino employee, may be an automated request, or may be a request from a gaming device of the secure gaming system environment 10. In response, the CA server, again utilizing a certificate generation tool such as OpenSSL software, generates, encrypts, and stores the GT/server public-private key-pair (GT/server key-pair). For example, much like the CA key-pair, using a randomly generated password, the certificate generation tool generates (block 372) an RSA key-pair for the gaming terminal/server, in one embodiment. Using a cryptographic algorithm such as triple-DES, the certificate generation tool encrypts (block 373) the public key and the private key of the key-pair. The encrypted key-pair for the gaming terminal/server is then stored in specified file, for example in a usr.key file stored in the CA server (or on another secure server), in one embodiment. An encrypted GT/server key-pair is now available for use with the GT/server digital certificate.

In response to a request to generate a GT/server digital certificate, the CA server provides an unsigned certificate request, or CSR (block 374). The request may be a manual request from an appropriate casino employee, may be an automated request, or may be a request from a gaming device of the secure gaming system environment 10. Returning to the illustrated example above (using OpenSSL software), in response to the request for the GT/server digital certificate, a new digital certificate request (CSR) is generated. The new digital certificate request includes, in one embodiment, the public key of the GT/server key-pair file to be used, the country (e.g., U.S.), state (e.g., Nevada) and locality (e.g., Las Vegas) of origin, an organization name (e.g., Harrah's), an organization unit name (e.g., Harrah's 1), a common name (e.g., Harrah's gaming terminal #1), and a filename of the new unsigned GT/server digital certificate (e.g., file user.csr). The unsigned GT/server certificate request is now ready for signature by the CA.

In response to receipt (block 376) of the unsigned GT/server certificate request forwarded by the CA server, the CA reviews (block 377) the certificate request to determine if the certificate complies with CA policies and whether the party who generated the certificate is trustworthy, in one embodiment. Alternatively, in another embodiment, in response to receipt of the unsigned GT/server certificate request, the CA forwards the unsigned GT/server certificate request to an RA. Upon approved by the RA, the unsigned GT/server certificate request is forwarded back to the CA for signature. If it is determined that the certificate complies with CA policies and that the party who generated the certificate is trustworthy, the CA signs (block 378) the public key of the GT/server certificate with a CA private key associated with a particular CA digital certificate, thereby forming a signed GT/server digital certificate.
Signing the GT/server certificate public key with the CA private key provides a "link" back to the trusted certification authority. The signed GT/server digital certificate includes, in one embodiment, the key-pair file to be used, the country (e.g., US), state (e.g., Nevada) and locality (e.g., Las Vegas) of origin, an organization name (e.g., Harrah's), an organization unit name (e.g., Harrah's 1), a common name (e.g., Harrah's gaming terminal #1), plus the number of days that the certificate is valid (e.g., 365 days). In addition, a CA certificate identifier number associated with the CA private key used to sign the GT/server digital certificate's public key, is included in the signed certificate, in one embodiment. A filename of the signed certificate is (e.g., file user.crt) is also included. Thus, the GT/server key generation and signing routine 370 provides a signed and authenticated GT/server digital certificate that includes a key-pair having a public key signed by a CA private-key, thereby linking, or chaining the GT/server certificate to the CA. The gaming terminal/server digital certificate is now ready for installation in any of the gaming device of the secure gaming system environment 10, and can provide authentication, privacy, content integrity, and non-repudiation of gaming software/data, both installed and transmitted, between the gaming devices of the secure gaming system environment 10.

Use of the gaming terminal/server digital certificate may provide authentication, privacy, content integrity, and non-repudiation of gaming software/data, both installed and transmitted, between the gaming devices of the secure gaming system environment 10. For example, the secure gaming server 14 may want to access a gaming terminal's digital certificate to authenticate the secure gaming terminal 12.

### b₍₃₎. Authentication Routine Using Digital Certificates

FIGs. 3E-3G are flowcharts of embodiments of an authentication routine using digital certificates. In one embodiment, the authentication routine may be performed by a controller 200 of one or more of the security elements or gaming devices of FIG. 1. The authentication routine provides a method of controlling gaming software/data access, including non-repudiation, authentication, privacy, and content integrity, to the gaming devices using GT/server digital certificates. The authentication routine also provides a method of authenticating the gaming devices of the secure gaming system environment 10, in one embodiment.

The GT/server digital certificates may be stored in any number of gaming devices or security elements within the secure gaming system environment 10, depending on the access control desired. Installation of the digital certificates in the gaming devices or security elements may be manual or may be automatic using an appropriate Certificate Management protocol (described below). For example, a GT digital certificate may be installed on the secure gaming terminal 12 and a server digital certificate may be installed on the secure gaming server 14 using a PKI Certificate Management Protocol, in one embodiment.

Referring to FIG. 3E, an authentication routine 380 begins operation when gaming software/data attempts access to the secure gaming terminal 12 or the secure gaming server 14 from another gaming device, in one embodiment. For example, the authentication routine 380 begins operation when the secure gaming terminal 12 requests a gaming software download (e.g., a video slot game, newly approved by jurisdictional regulators) from a secure gaming server 14. Using a communication protocol such as the Secure Socket Layer (SSL) protocol, which utilizes a combination of public key and symmetric key encryption, the secure gaming server 14 and the secure gaming terminal 12 are each authenticated via a "handshake" procedure prior to the gaming software download, in one embodiment. As will be appreciated by those of ordinary skill in the art, the authentication routine 380 may begin operation when the secure gaming server 14, the gaming terminal 22, the gaming server 28, the first secure communication apparatus 24, the second secure communication apparatus 30, the first integrity apparatus 26, the second integrity apparatus 32, or an appropriate person initiates gaming software/data transfer or gaming software/data authentication, in various embodiments.

The handshake procedure begins when secure gaming terminal 12 transmits to the secure gaming server 14 its SSL version number, available cryptographic algorithms, and data needed to allow the secure gaming sever 14 to communicate with the secure gaming terminal 12 (block 382), in one embodiment. In response, the secure gaming server 14 transmits to the secure gaming terminal 12 its SSL version number, available cryptographic algorithms, and data needed to allow the secure gaming terminal 12 to communicate with the secure gaming server 14 (block 383), in one embodiment. The secure gaming server 14 also transmits its server digital certificate, and if the secure gaming terminal 12 is requesting a server resource (e.g., gaming software or data) that requires gaming terminal authentication, the secure gaming server 14 requests the secure gaming terminal's 12 gaming terminal digital certificate.

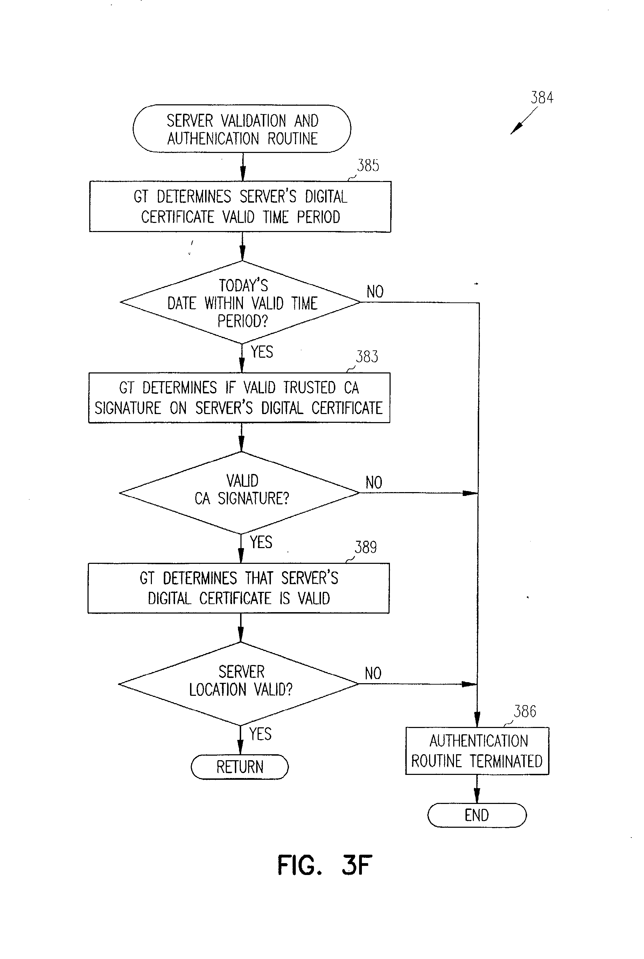

Referring to FIG. 3F (server validation and authentication routine 384), the secure gaming terminal 12 uses information received from the secure gaming server 14 to authenticate binding between the public key of the gaming server's digital certificate and the secure gaming server 14, in one embodiment. First, the secure gaming terminal 12 checks the server's digital certificate's validity period (block 385). If the current date and time is outside a valid range, the authentication process is terminated (block 386). If the current date and time is inside the valid range, the secure gaming terminal 12 compares a distinguished name (DN) of the CA that issued the server's digital certificate to a list of trusted CAs held by the secure gaming terminal 12, in one embodiment. The list of trusted CAs determines which digital certificates the secure gaming terminal 12 will accept. If the DN of the CA that issued the server's digital certificate matches a DN of a CA on the list of trusted CAs held by the secure gaming terminal 12, the secure gaming terminal 12 uses a public key (found in the list of it's trusted CA's) to validate the CA's digital signature on the gaming server's digital certificate (block 388), in one embodiment. If the information in the gaming server's digital certificate changed since it was signed by the trusted CA, the secure gaming terminal 12 will not authenticate the gaming server's identity and the authentication process is terminated (block 386). Similarly, if the CA's public key in the gaming server's digital certificate does not correspond to the private key used by the CA to sign the gaming server's digital certificate, the secure gaming terminal 12 will not authenticate the server's identity and the authentication process is terminated (block 386). If all the criteria are met, the gaming server's digital certificate is considered valid by the secure gaming terminal 12 (block 389), in one embodiment.

The secure gaming terminal 12 confirms that the secure gaming server 14 is actually located at a network address specified by a domain name in the gaming server's digital certificate (block 390). This prevents an attack commonly referred to as a Man-in-the-Middle attack where a rogue program intercepts communication between the secure gaming terminal 12 and secure gaming server 14 and as a result, substitutes its own key-pair so that the secure gaming server 14 "thinks" that it is properly communicating with the secure gaming terminal 12, and vice versa. If the secure gaming terminal 12 determines that the secure gaming server 14 is not located at the network address specified by a domain name in the gaming server's digital certificate, the secure gaming server 14 is not authenticated by the secure gaming terminal 12 (block 386), in one embodiment. As a result, the secure gaming terminal 12 refuses to establish a connection with the secure gaming server 14. If the secure gaming terminal 12 determines that the secure gaming server 14 is actually located at a network address specified by a domain name in the gaming server's digital certificate, the secure gaming server 14 is authenticated, in one embodiment.

Using all of the data generated (up to step 389), the secure gaming terminal 12 may create a "premaster secret" for the session, and encrypt the premaster secret with the gaming server's public key obtained from the gaming server's digital certificate. The secure gaming terminal 12 may then send the encrypted premaster secret to the secure gaming server 14.

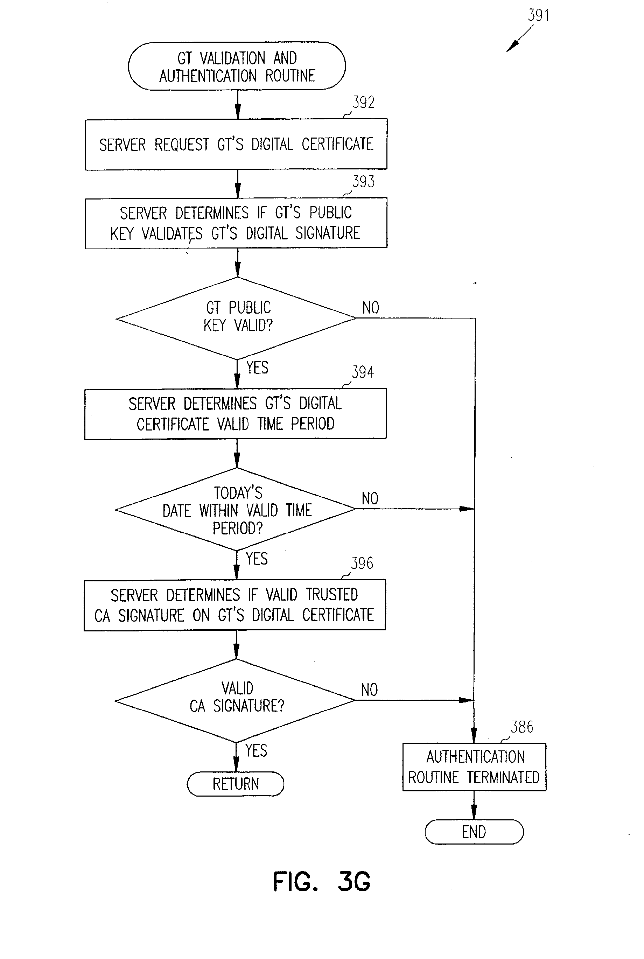

The server validation and authentication routine (384) is competed. Referring again to FIG. 3E, the gaming validation and authentication routing (391) is then performed. This routine is described in more detail in conjunction with FIG. 3G. If the secure gaming terminal 12 determines that the gaming server's digital certificate is valid and that the gaming server is authentic, the secure gaming server 14 authenticates the secure gaming terminal 12, in one embodiment. The secure gaming server 14 begins the authentication process by requesting (block 392) that the secure gaming terminal 12 transmit the gaming terminal's digital certificate and a separate piece of digitally signed data (e.g., signed using the public key of private-public key-pair noted in the gaming server's digital certificate). The separate piece of digitally signed data utilizes a digital signature. The digital signature is generated by creating a one-way hash from data randomly generated during the handshake procedure and known only to the secure gaming terminal 12 and the secure gaming server 14, in one embodiment. The one-way hash of the random data may be encrypted with the private key that corresponds to the public key in the gaming terminal's digital certificate.

Using the gaming terminal's digital certificate and the separate piece of digitally signed data, the secure gaming server 14 determines whether the gaming terminal's public key validates the gaming terminal's digital signature (block 393). Therefore, upon receipt, the secure gaming server 14 uses the digitally signed data to validate the public key in the gaming terminal's digital certificate and to authenticate the gaming terminal's identity the gaming terminal's digital certificate claims to represent. If the digital signature is validated with the public key in the gaming terminal's digital certificate, the secure gaming server 14 determines, in one embodiment, that the public key in the gaming terminal's digital certificate matches the private key used to create the digital signature and that the separate piece of digitally signed data has not been tampered with (by an attacker) since the time it was digitally signed.

The secure gaming server 14 checks the gaming terminal's digital certificate's validity period (block 394). If the current date and time is outside a valid range, the authentication process is terminated (block 386). If the current date and time is inside the valid range, the gaming server compares a distinguished name (DN) of the CA that issued the gaming terminal's digital certificate to a list of trusted CAs held by the gaming server, in one embodiment. The list of trusted CAs determines which digital certificates the secure gaming server 14 will accept. If the DN of the CA that issued the gaming terminal's digital certificate matches a DN of a CA on the list of trusted CAs held by the secure gaming server 14, the secure gaming server 14 uses a public key (found in the trusted CA list) to validate the CA's digital signature on the gaming terminal's digital certificate (block 396), in one embodiment. If the information in the gaming terminal's digital certificate changed since it was signed by the trusted CA, the secure gaming server 14 will not authenticate the gaming terminal's identity and the authentication process is terminated (block 386). Similarly, if the CA's public key in the gaming terminal's digital certificate doesn't correspond to the private key used by the CA to sign the gaming terminal's digital certificate, the secure gaming server 14 will not authenticate the terminal's identity and the authentication process is terminated (block 386), in one embodiment.

The gaming terminal validation and authentication routine (391) is then completed. Referring again to FIG. 3E, if all the criteria are met, both the secure gaming terminal 12 and the gaming terminal's digital certificate are considered valid and authenticated by the secure gaming server 14 (block 397). Therefore, using the handshake procedure, the secure gaming terminal 12 has determined that both the secure gaming server 14 and the gaming server's digital certificate are valid and authentic and that a man-in-the middle attack has not occurred. Likewise, using the handshake procedure, the secure gaming server 14 has determined that both the secure gaming terminal 12 and the gaming terminal's digital certificate are valid and authentic.

Prior to the gaming software download from the secure gaming server 14 to the secure gaming terminal 12, the secure gaming server 14 determines whether the secure gaming terminal 12 is authorized to access the requested gaming software (block 398). The secure gaming server 14 may determine whether the secure gaming terminal 12 has approved access in any number of ways. For example, the secure gaming server 14 may determine whether the secure gaming terminal 12 has approved access to the gaming software by checking its access control lists (ALCs) stored in one of the memories of the controller of FIG. 2. If the secure gaming server 14 determines that the secure gaming terminal 12 has access to the requested gaming software, the secure gaming server 14 establishes a connection to the location of the gaming software, in one embodiment.

When the secure gaming terminal 12 is successfully authenticated by the secure gaming server 14, the secure gaming server 14 may use its private key to decrypt the encrypted premaster secret. Using the premaster secret, both the secure gaming server 14 and the secure gaming terminal 12 generate a "master secret". Using the master secret, both the secure gaming server 14 and secure gaming terminal 12 generate a one-time session key for encrypting and decrypting. In addition to symmetrically encrypting and decrypting the gaming software and gaming data exchanged between the secure gaming server 14 and the secure gaming terminal 12, in one embodiment, the one-time session key provides integrity verification (i.e., it detects any changes occurring in the gaming software/data between the time it was sent and received).

Finally, the secure gaming terminal 12 transmits a message to the secure gaming server 14 indicating that future transmissions from the secure gaming terminal 12 will be encrypted with the session key. It then sends a separate, encrypted message indicating that its portion of the handshake procedure is complete, in one embodiment. Similarly, the secure gaming server 14 transmits a message to the secure gaming terminal 12 indicating that future transmissions from the gaming server will be encrypted with the session key. It then sends a separate, encrypted message indicating that its portion of the handshake procedure is complete, in one embodiment. The gaming software is then encrypted with the one-time session key and downloaded to the secure gaming terminal 12 (block 399). In this way, authentication of gaming software/data transmitted between, or located within the gaming devices and security elements of the secure gaming system environment 10 is provided.

As will be appreciated by those of ordinary skill in the art, in addition to SSL, other suitable communication protocols may be used in the authentication routine 380.

### III. THE DETAILED SECURE GAMING SYSTEM

Fig. 4 illustrates one possible embodiment of a detailed secure gaming system 400 in accordance with an embodiment of the invention. Referring to FIGs. 4A and 4B, in addition to the elements network and systems discussed below, the detailed secure gaming system 400 includes the gaming devices (e.g., secure gaming terminals, secure gaming servers, gaming routers, etc.) and the security elements (e.g., intrusion detection systems, firewalls, etc.) discussed in connection with FIG. 1. The detailed secure gaming system 400 is configured with one or more customer networks 420, 422, and 424 communicatively coupled to a public communication network such as the Internet 416, a customer corporate center 426 communicatively coupled to the Internet 416, and a game provider data center network 428 communicatively coupled to the Internet 416. In addition, the detailed secure gaming system 400 includes a jurisdiction data center 430. Although only one gaming system environment is illustrated, it is contemplated that there may be more or fewer customer networks, customer corporate centers, game provider data centers, and jurisdiction data centers within the network.

In general, the customer networks 420, 422, 424 may be located in the same or different geographic regions. For example, the customer network 420 may be provided in a first casino, the customer network 422 may be provided in a second casino, and the customer network 424 may be provided in a third casino located in a separate geographic region than the first and/or second casino. Alternatively, each of the customer networks 420, 422, 424 may be provided in a boat, an airplane, a store, a race track (e.g., a "racino"), etc.

In general, the customer corporate center 426, which may be operated by or for a gaming proprietor (e.g., Harrah's, a State operating lottery gaming terminals, an Indian tribe, etc.), administers operation of the gaming devices within its customer networks 420, 422, 424. Administration at the customer corporate level may include, inter alia, securing gaming licenses from the game provider data center network 428, ensuring compliance of its gaming hardware and software with jurisdiction regulations, ensuring the integrity and security of gaming software/data operating its gaming terminals, enabling appropriate communication between its gaming devices and the game provider data center network 428, etc.

In general, the game provider data center network 428, operated by or for a game provider such as WMS Gaming, Inc. (Illinois), administers operation of its gaming devices within a detailed secure gaming system (e.g., system 400). Administration at the game provider level may include, inter alia, administering and coordinating licenses to the customer corporate center 426, ensuring appropriate gaming hardware and software compliance with the various jurisdiction regulations, administering gaming software integrity verification, providing gaming software/data downloads or revoking software downloads when appropriate, and/or general gaming device monitoring functions. Although only one game provider data center is shown as representative of the game provider data center network 428, it is contemplated that there may be additional game provider data centers, co-located or remotely located from each other, provided within the game provider data center network 428, depending on the secure gaming system environment configuration. For example, there may be one corporate-level game provider data center with authority and coordination responsibility for a number of regional-level game provider data centers. Each regional-level game provider data center may then have authority and coordination responsibility for customer corporate centers and customer networks in its region. As will be appreciated by one of ordinary skill in the art, the functions provided by the game provider data center 428 may also be provided by the customer corporate center 426.

In general, the jurisdiction data center 430, which may also operated by or for a casino game provider, generally tracks and administers data associated with the operation of gaming terminals in a particular jurisdiction region. Each particular gaming jurisdiction determines methods and procedures for operation of the jurisdiction data center 430. Therefore, because individual gaming jurisdictions have varied regulatory restrictions regarding gaming terminal operation, the level of tracking and administration required may vary from jurisdiction data center to jurisdiction data center 430.

Referring again to FIGs. 4A and 4B, the detailed secure gaming system 400 includes the secure communication elements, the access control elements, and the integrity elements discussed in connection with FIG. 1. For example, in one embodiment, each of the gaming terminals, routers, and servers are monitored by a data integrity assurance system ("DIA"). Additionally, the routers and servcrs may include intrusion detection systems ("ID") and/or network vulnerability scanners ("NVA"), in various embodiments. Further, the servers include antivirus scanners ("AV") , in one embodiment. Although not illustrated by individual icons, additional the secure communication elements, the access control elements, and the integrity elements may be included in the detailed secure gaming system 400, in another embodiment.

Referring again to Fig. 4, the detailed secure gaming system 400 utilizes one or more virtual private network (VPN) configurations, for example VPNs 412 and 414, in one embodiment. The VPNs 412, 414 provide a secure connection over a public communication network such as the Internet 416 for gaming devices communicatively coupled to the VPN. Use of such VPN configurations 412, 414 may partially or wholly reduce the need for costly dedicated communication networks between and/or among the various gaming devices of the detailed secure gaming system 400. As will be appreciated by those of ordinary skill in the art, additional VPNs may be implemented within the detailed secure gaming system 400. For example, a VPN may be utilized to enable secure communication between the jurisdiction data center 430 and the game provider data center network 428.

Secure access within the VPNs 412, 414 is maintained using one of any number of tunneling protocols. In addition, a number of other security measures (discussed in connection with FIG. 1) can be implemented to ensure the integrity of gaming data traversing the VPNs 412, 414. In various embodiments, the gaming data transmitted via the VPNs 412, 414 may include new or modified gaming software for game play, bonus game play, tournament play, progressive lottery game play, etc., on the gaming terminals. In other embodiments, the gaming data may also include gaming terminal game performance data, maintenance information or instructions, security data, maintenance data, player data, accounting data, game outcomes (for systems having central determination), gaming device software (OS, peripherals, etc.), etc.

In addition, although not shown, the detailed secure gaming system 400 may include one or more dedicated communication network segments configured as an intranet, in one embodiment. Such an intranet configuration may be included in a server-based gaming system having one or more central server(s) interconnected to a number of gaming terminals. The intranet may be configured to enable downloading of (software) games, game configuration data, game outcomes, etc. from the central server(s) to the gaming terminals, and to enable uploading of marketing and operations data from the gaming terminals to the central server, in one embodiment. The server and the gaming terminals may be interconnected via private leased phone lines, private microwave or satellite links, dedicated hardwire, wireless links, etc.

The dedicated communication network segments may include security elements such as (1) authentication capability for gaming software before and after installation including on-demand authentication; (2) authentication, authorization, and accounting of gaming sessions; (3) DIA of designated software files in the central server and the gaming terminals; (4) gaming software VA; (5) security information management; and/or (6) proactive and reactive intrusion detection (ID) systems, to name a few.

At a top level, each of the subsystems of the detailed secure gaming system 400 (e.g., the customer networks 420, 422, 424, the customer corporate data center 426, the jurisdiction data center 430, and the game provider data center network 428) operate both independently and together to provide a sophisticated gaming environment while, at the same time, ensuring gaming device compliance with the various jurisdictional regulatory restrictions, in one embodiment. For example, if gaming data gathered and data mined (i.e., the gaming data is sorted to identify patterns and establish relationships) at the customer corporate center 426 indicates a very popular game, for example, a Monopoly bonus game manufactured by WMS Gaming, Inc., the customer may desire to purchase 50 additional Monopoly bonus game licenses from the game provider, in one embodiment. The request for the 50 additional licenses by the customer corporate center 426 can be made via the VPN 414. Similarly, payment for the 50 additional Monopoly bonus game licenses can be made via the VPN 414. In addition, the jurisdictional data center 30 can verify compliance of the Monopoly game with the local regional jurisdiction regulations (discussed below).

Upon receipt of payment for the 50 additional licenses, the customer can download 50 Monopoly bonus games, either from its own database or from the game provider's data base, into their servers or into 50 of their gaming terminals, in one embodiment. The VPN 412 may be used to download Monopoly game software packets, which may or may not be encrypted to prevent unauthorized reading during transit, into the selected customer gaming terminals. After downloading, immediate authentication of the Monopoly game software packets will then ensure that no unauthorized data packets were inserted and/or that no Monopoly game software packets were deleted or modified, in one embodiment.

In various embodiments, authentication of the Monopoly game software packets by the detailed secure gaming system 400 can be achieved in any number of ways, including, for example, using MACs, one-way hash algorithms, public-key cryptography, digital signature schemes using a pair of keys - a public key and a private key, symmetric encryption, random number generators to generate random numbers for keys, unique values in protocols, protocols using more than one of the above-mentioned authentication techniques, and so on. For example, authentication of the Monopoly bonus game software can be verified by sending randomly generated seed data with the Monopoly software data block, running it through a secure hash algorithm such as SHA-1, and verifying the resulting message digest at the receiving end. Subsequent "spot-checks" of the downloaded Monopoly bonus game may ensure continued authentication of the software. Similarly, other game software, updates to the game software, firmware updates to gaming terminal peripherals, software maintenance patches, and other data can be downloaded to the gaming terminals using the communication links provided in the detailed secure gaming system 400.

### IIIa. Customer Networks

Each of the customer networks 420, 422, 424 may include a number of gaming terminals interconnected to one or more servers via a property local area network (LAN), in one embodiment. Each of the gaming terminals may be configured as a client that relies on the server(s) for resources (i.e., a client/server architecture), in one embodiment. In an alternate embodiment, each of the gaming terminals may be configured with capability equivalent to the server(s) (i.e., a peer-to-peer architecture). The customer networks 420, 422, 424 may also include one or more controllers and/or switches to accommodate variations in the network interfaces due to varied network protocols (e.g., RS232, RS485, Ethernet, wireless, etc.) utilized to communicate between the gaming devices.

The customer network 420 includes gaming terminals 432 and 434 interconnected to a server 436 via a property LAN 438, in one embodiment. Similarly, the customer network 422 includes the gaming terminals 440, 442, and 444 interconnected to a server 446 via a property LAN 448, and the customer network 424 includes the gaming terminals 450, 452, and 454 interconnected to a server 456 via a property LAN 458. Other servers or computers (not shown) may be included within the customer networks 420, 422, 424 to manage customer network resources (e.g., files, databases, storage, application programs, printers and other devices). For example, the customer network 424 may include a network computer for managing network traffic, a proxy server for improving network performance, etc.

The gaming terminals of the customer networks 420, 422, 424 may be configured in any number of ways. For example, in one embodiment, instead of utilizing several EPROMs programmed with individual games, a gaming terminal may be configured with only one EPROM which administers authentication algorithms and boot-up the software for the gaming terminal (BIOS), etc. Thus, in one embodiment, instead of residing directly on the EPROM, gaming software can be downloaded from a remote gaming device, such as a server, via either a VPN (Internet) or a dedication communication link (intranet), and the authentication algorithm(s) programmed on the single EPROM can ensure the authentication of the downloaded software. In various embodiments, the gaming software can also be downloaded from high capacity storage devices such as CD ROMs, DVDs, hard drives, compact flash memory, etc., and authenticated using an authentication algorithm stored on the one EPROM. In this way, manual authentication of one EPROM replaces manual authentication of the several EPROMs typical of traditional gaming terminals, and therefore translates into a savings of memory resources and/or manpower. In addition, using this approach may preclude a need for manufacturers of gaming terminals and gaming software to develop one large multi-jurisdictional gaming software version. As will be appreciated by those of ordinary skill in the art, additional EPROMs programmed with additional security elements may be included in the gaming terminals.

Once networked to other gaming devices, the gaming terminals may be more susceptible to security breaches originating elsewhere in the detailed secure gaming system 400, for example, at the network or Intranet level. Methods discussed above in connection with FIG.1 for securing gaming terminal software, hardware and firmware may be implemented at the server, gaming terminal, LAN and/or network level of the detailed secure gaming system 400, in various embodiments.

The servers 436, 446, 456 of the customer networks 420, 422, 424, respectively, are utilized to accumulate and analyze data relating to the operation of the gaming terminals (e.g., data indicative of dollar amounts or numbers of wagers on each of the gaming terminals), in one embodiment. The servers 436, 446, 456 may also be utilized to provide distinct types of network gaming services, in various embodiments, including, for example, wide area progressive (WAP) capability that allows multiple gaming terminals to contribute to and compete for system-wide jackpots; slot tracking and accounting capability; cashless gaming management and validation; player tracking capability; interactive linked gaming capability; bonussing capability; central determination; gaming software/data downloading capability, etc. In addition, the servers 436, 446, 456 may also provide control and interface functions for the gaming devices within the customer networks 420, 422, 424, in various embodiments.

In some cases, the gaming software/data may be compiled by the servers 436, 446, 456 and may, therefore, be gaming terminal independent. When properly authenticated by a gaming terminal configured to receive encrypted etc. game data files (resulting from compiling the gaming software/data), the game data files can direct the gaming terminal to execute the corresponding game and operate the associated devices (i.e., currency printer, buttons, etc.), in one embodiment. As will be appreciated by those of ordinary skill in the art, in addition to the servers 436, 446, 456, the gaming software/data may be compiled on any suitable server in the detailed secure gaming system 400, in various embodiments. In this way, gaming software/data may be efficiently designed, updated, and verified, and in conjunction with the security elements of the detailed secure gaming system 400, may allow "on demand" game play at remotely located gaming terminals.

The property LANs 438, 448, 458 may be any type of suitable property LAN configuration including, for example, a dedicated hardwired property LAN or a wireless property LAN. Further, the property LANs 438, 448, 458, may be configured in a bus topology, a star topology, a ring topology, a tree topology, a full or partial mesh topology, etc., and may therefore include a single customer network data link or multiple customer network data links. Although the property LANs 438, 448, 458, are shown coupled to two or three gaming terminals and one server, it should be understood that different numbers of gaming terminals and servers may be used. For example, the customer network 422 may include a plurality of servers and tens and/or hundreds of gaming terminals, all of which may be interconnected via the property LAN 448.

Referring to customer networks 420, 422, 424, each of the property LANs 438, 448, 458 is communicatively coupled to the Internet 416 via a router 460, 462, and 464, respectively. The routers 460, 462, 464 which may be hardware, software or combinations of both, enable transmission of packetized gaming data to an appropriate destination within the detailed secure gaming system 400. Using the addresses on each of the packets, the routers 460, 462, 464, send the packets toward their destination. Although only one router is shown associated with each of the customer networks 420, 422, 424, additional routers may be included, depending on the desired network configuration. Additional routers (not shown) may also be located at various points within the detailed secure gaming system 400.

As illustrated by FIGs. 4A and 4B, each of the private subsystems of the detailed secure gaming system 400 (e.g., the customer networks 420, 422, 424, the customer corporate data center 426, the jurisdiction data center 430, and the game provider data center network 428) includes a firewall to protect gaming devices within the private subsystems from intrusions via the Internet 416, in one embodiment. Thus, the firewalls 491, 493, 495 are configured to prevent suspect software from entering the customer networks 420, 422, 424, respectively, the firewall 489 is configured to prevent suspect software from entering the game provider data center network 428, the firewall 499 is configured to prevent suspect software from entering the jurisdiction data center 430, and the firewall 497 is configured to prevent suspect software from entering the customer corporate data center 426. In addition, the firewalls may be implemented via traditional router-based firewalls, software-based firewalls, ASICs, network processors, adaptive computing integrated circuits, etc. As a result, each of the firewalls may be configured differently or the same, depending on the security threshold desired.

Although only one firewall per private subsystem is shown in FIGs. 4A and 4B, additional firewalls may be used. For example, a proxy firewall or two logical firewalls may be used to build a safety buffer around one or more of the private subsystems. The buffer zone may be used to isolate a Web server in one or more of the private networks from other gaming devices within the private network. One firewall may be used to protect the buffer zone itself (i.e., placed between the Web server and the public network), while a second firewall configured with more restrictions, and placed interior to the first (i.e., placed between the Web server and the other gaming devices), protects the gaming devices within the private customer networks.

### IIIb. Communication Network

As previously mentioned, the VPN 412 provides secure access between the gaming devices communicatively coupled to the VPN 412. The gaming devices may be located over a geographically small or large area and therefore may be in close proximity to each other or may be remotely located from each other. For example, the VPN 412 provides secure access between the gaming devices at the customer corporate center 426 and each of its customer networks 420, 422, 424. Similarly, the VPN 414 provides secure access between the gaming devices at the customer corporate center 426 and the game provider data center 428.

The VPNs 412, 414 may include one or more types of electro-magnetic links, herein referred to as wireless (e.g., radio links, microwaves, etc.) or wireline (dial-up, fiber optic, wires, etc) network links. For example, in the illustrated embodiment, a satellite link 466 forms a portion of the VPN 412 that communicatively couples the customer network 420 to the Internet 416. Within the customer network 420, one or more gaming devices may be directly coupled to a satellite dish 467 via suitable cabling and network interfaces. Thus, gaming data may be transmitted from the customer network 420 to the customer corporate center 426 via the satellite dish 467, the satellite link 466, and the Internet 416, and vice versa.

Similarly, a radio frequency (RF) link 468 forms a portion of the VPN 412 that communicatively couples the customer network 424 to the Internet 416. The RF link 468 is configured to enable transmission from, or reception to, fixed or mobile gaming devices (e.g., gaming terminal 454, server 456. etc.) of the customer network 424 using any one of a number of well-known RF technologies including, for example, a wireless cellular technology available from Motorola, Inc., or an IEEE 802.11 technology available from Cisco Systems, etc. Thus, if the wireless cellular technology is used to link the customer network 424 with the Internet 416, gaming data may be transmitted from the customer network 424 to the customer corporate center 426 via one or more radio tower(s) 469, one or more base transceiver stations, etc., (not separately illustrated), a central switching office 470 (e.g., PSTN), and the Internet 416, and vice versa.

A wireline link 474 forms another portion of the VPN 412 that communicatively couples the customer network 422 to other elements of the detailed secure gaming system 400 via the Internet 416. The wireline link 474 may include any number of standard wireline connections, for example, a coaxial cable connection, a phone line connection, wireline frame relay connection, a wireline ATM connection, a wireline Ethernet connection, etc. Thus, gaming data may be transmitted from the customer network 422 to the customer corporate center 426 via the wireline, or wireline link 474, and vice versa. Additional other network links may be established between the customer networks 420, 422, 424 and/or the customer corporate center 426. For example, the customer network 422 may be communicatively coupled to the customer corporate center 426 via a number of routers (e.g., the router 462) and a local Internet Service Provider (ISP) using one of the wireline or wireless technologies discussed above. Further, although not specifically illustrated in FIGs. 4A and 4B, the jurisdiction data center 430 may be communicatively coupled to the Internet 416 via any of the above-mentioned methods.

### IIIc. Customer Corporate Center

As depicted in FIGs. 4A and 4B, the customer corporate center 426 includes a customer data integrity server 476, a customer corporate server 478, and a customer license server 480 interconnected via the property LAN 482. The customer corporate center 426 may additionally include any number of client computers to provide support for gaming terminal operation.

The customer, or gaming proprietor, may own one gaming establishment having a few gaming terminals, may own a large casino network having thousands of gaming terminals, or may own a gaming establishment sized somewhere between the two extremes. In the case of a large casino company such as Harrah's, it may be desirable to operate a customer corporate center 426 to configure, coordinate, maintain, and monitor all of the gaming devices associated with the large casino company. A large casino company may, for example, operate 30 casinos averaging 3000 gaming terminals per casino, in 14 different jurisdictions. In addition, a state run gaming operation such as New York state's video lottery terminal network may also require a central function similar to that provided by the customer corporate center 428. The level of complexity of the customer corporate center 428 may vary, depending on numerous factors.

In general, configuration, coordination, maintenance, and monitoring operations performed by the customer corporate center 428 include, inter alia, knowledge and control of what types of gaming terminals are installed in the various casinos, which versions of gaming software are being run on the gaming terminals, which software gaming components make-up those versions, what types of peripheral devices (e.g., bill validators) are associated with the gaming terminals, which version of a particular type of peripheral devices is being used, what version of peripheral software is being run on the peripheral devices, etc. Accordingly, the customer corporate server 478 performs the "master" casino floor management tasks associated with configuring, operating, maintaining, and monitoring the gaming devices operated by the customer.

The customer license server 480 maintains a database of all gaming license information required by the customer. This may include what licenses were purchased by the customer, what licenses have been revoked, what gaming software is currently approved for licensing, the locations of the licensed games, non-available but pending licenses, and all other license information and details.

The customer data integrity server 476 is configured to maintain a current database of all information associated with approved, rejected, or withdrawn gaming software associated with its gaming terminals, including gaming software components, signatures for authentication purposes, etc. The customer data integrity server 476 is also configured to authenticate and verify gaming terminal software components in the customer's gaming terminals, and to coordinate the steps necessary to shut down a gaming terminal that has been determined to be running unapproved or unauthentic software. Further, the customer data integrity server 476 is configured to collect revenue data from any the individual gaming terminals operating within the networks maintained by the customer. For redundancy and fault tolerance reasons, some or all of the tasks performed by customer data integrity server 476 may also be performed by any suitable servers in the customer corporate center 426.

As will be appreciated by those of ordinary skill in the art, there may be more or less servers provided in the customer corporate center 426, depending on the level of configuring, operating, maintaining, and monitoring required.

### IIId. Jurisdiction Data Center

Some jurisdictions may require that a data center be located within their jurisdiction. For example, some jurisdictions such as New Jersey mandate that a jurisdiction data center be maintained by the game providers to oversee wide area gaming networks delivering progressive games. The jurisdiction data center may be required to gather gaming data, to track the configuration of gaming devices, to monitor compliances with jurisdictional regulations, to query gaming devices such as servers and gaming terminals, and to generally have an ability to provide real-time information of the detailed secure gaming system 400 to a jurisdiction user. In addition, the level of oversight required by each of the individual jurisdiction data centers may vary. For example, in New Jersey manual authentication of gaming software in each and every machine may be required, while in Nevada only spot-audit authentication of gaming software/data may be required. In this way, the gaming regulators in a particular jurisdiction can maintain oversight of gaming devices in its jurisdiction.

A jurisdiction data integrity server 487 within the jurisdiction data center 430 is configured to maintain a current database of all information associated with approved, rejected, or withdrawn gaming software in the jurisdiction, including gaming software components, signatures for authentication purposes, etc. The jurisdiction data integrity server 487 may also be utilized to authenticate and verify gaming terminal software components approved for use by gaming terminals in the particular jurisdiction, to coordinate the steps necessary to shut down a gaming terminal that has been determined to be running unapproved or unauthentic software, and to collect revenue data from any number of sources including the individual gaming terminals, the gaming terminal servers 436, 446, 456, the customer corporate center(s) 426, and the game provider data center(s) 428.

### d₍₁₎. Remote Authentication Routine

For example, the jurisdiction data integrity server 487 may be configured to perform remote authentication of gaming software/data in a gaming terminal located in the customer network 420. FIG. 5 is a flowchart of an authentication routine 500 that may be performed by a server such as the jurisdiction integrity server 487. Although the authentication routine 500 is performed using the seed values and hashing techniques discussed above, any number of other suitable authentication routines may be executed by the jurisdiction data integrity server 487.

Prior to beginning the authentication routine 500, an approved gaming software/data component having an assigned program number is selected for authentication. The gaming terminals having or receiving (via a download) the approved gaming software/data components are identified by their machine ID. After identifying the machine IDs and the program numbers, the jurisdiction data integrity server 487 authenticates the selected gaming software/data components using one of a number of authentication techniques, in various embodiments. First, the jurisdiction data integrity server 487 selects (block 502) a seed value generated via a random number generator. The approved gaming software/data component version selected for authentication is stored in its jurisdiction data integrity server 487. The seed value is appended (block 504) to the approved software component version to be authenticated. The combination of the approved software component version and the appended seed value is manipulated via a cryptographic algorithm such as a SHA-1 algorithm to produce a first message digest (block 506). The addition of the randomly generated seed value prevents a would-be attacker (who managed to discover the message digest expected from the particular gaming software/data component) from manipulating the authentication process by deceiving the jurisdiction data integrity server 487 into believing that an unauthentic gaming software/data component installed on the gaming terminal is authentic. The same seed value is transmitted or downloaded (block 508) to the gaming terminal(s) whose gaming software/data components were selected for authentication. Secure transmission of the seed value may occur via the VPN 414 to the customer corporate center router 479, and via the VPN 412 to the identified gaming terminals.

Upon receipt, the gaming terminal performs a similar routine: it appends the seed value to the corresponding gaming software/data component (block 510), performs the same calculation to yield a second message digest (block 512), and then transmits the second message digest to the jurisdiction data integrity server 487. The jurisdiction data integrity server 487 compares (block 514) the received message digest calculated by the gaming terminal (the second message digest) to the message digest it previously generated (the first message digest). A match between the first and second message digests indicates that the gaming software/data component installed on the gaming terminal(s) is authentic (block 516). If the first and second message digests do not match, the gaming software/data is not authentic (block 518) and the jurisdiction data integrity server 487 can execute the steps necessary to take the gaming terminal out of service (block 520) using a suitable fail-safe method. In this way, in one embodiment, gaming terminal software can be authenticated and controlled from a remote location such as the jurisdiction data center. This method of authentication can be similarly executed by other gaming devices within the detailed secure gaming system 400. Additional methods of authentication are described in United States Patent Application Serial No. 10/119,663, entitled "Gaming Software Authentication", naming Gadzic et al. as inventors, filed April 10, 2002, and herein incorporated by reference in its entirety.

Referring again to FIGs. 4A and 4B, the jurisdiction data center 430 may also include jurisdiction test lab 485 configured to test hardware and software aspects of gaming terminals and gaming software/data components. In addition to gaming terminals and servers, the lab may include a variety of equipment and diagnostic tools for testing the gaming terminals and associated gaming software/data components.

### IIIe. Game Provider Data Center Network

In the illustrated example, the game provider data center network 428 includes an operation and maintenance (O&M) server 484, a license server 486, a regional game server 483, a global game server 490, and an accounting, authentication, and authorization (AAA) server 492. As will be appreciated by those of ordinary skill in the art, more or fewer servers, configured in another arrangement, may be included in the game provider data center network 428. Although not shown, the game provider regional data center 428 may also include one or more client computers, for example, a game service management client used to access and manage all game provider services.

As previously mentioned, the game provider data center network 428 is owned and operated by or for a provider of casino gaming terminals, associated gaming software, and gaming infrastructure. In general, the game provider regional data center 428 utilizes a VPN with a client-server arrangement to securely authorize, coordinate, enable, monitor, manage, and/or administer the transfer of game software and associated other software (e.g., licenses) between and among the devices of the detailed secure gaming system 400, in one embodiment.

The game provider data center network 428 may be provided at the regional level (e.g., the west region including the areas of Oregon, California, Arizona, New Mexico, Colorado), at the corporate global level, or at multiple levels to provide the safety afforded by redundancy and single, double, etc., fault tolerance.

Within the game provider data center network 428 of FIGs. 4A and 4B, the global game server 490 is configured to maintain a complete database of all game provider products distributed within the detailed secure gaming system 400, in one embodiment. The database of game provider products may include data regarding both hardware and software, their configurations, the status of their gaming software (approved, rejected by a jurisdiction, withdrawn from a jurisdiction and therefore should not be in the field), peripherals associated with its products, versions of the peripherals and their software (e.g., versions of bill validators and versions of bill validation software currently in the field), etc. In addition, the complete database may be used for any number of purposes, for example, to determine whether a particular gaming device in the field requires a software download (e.g., based on its database, the global game server 490 could determine which bill validators need to be updated with a current version of bill validation software).

The global game server 490 provides a root distribution point for game software including handling secure downloading of game software to both game clients (e.g., gaming terminals 450, 452, etc.) and game servers (e.g., server 456), in one embodiment. Secure downloading of game software between the various gaming devices (i.e., between servers, or between a server and a gaming terminal) requires approval by the AAA server 492.

The license server 486, which may be a regional-level server or a global-level server, is configured to handle the management and distribution of gaming terminal licenses to a customer(s). A gaming terminal license allows a particular game in the form of game software to be downloaded to, and/or played on, one or more gaming terminals in the detailed secure gaming system 400. The license server 486 also maintains database of significant license information. This may include what licenses were purchased by what customers, what licenses have been revoked, what gaming software is currently approved for licensing, the locations of the licensed games, non-available but pending licenses, and all other license information and details. The license server 486 may also be configured to perform all activities associated with game licensing.

The AAA server 492 is configured to provide accounting, authentication, and authorization functions for the game provider, in one embodiment. The accounting function provides an accounting capability to the game provider for any games that the game provider has "on participation" (i.e., the game provider shares in the revenue generated by a game terminal placed in a customer network) or was sold to a customer outright. The accounting capability provided by the AAA server 492 enables the game provider to account for and collect the revenues generated by the gaming terminal. In addition, accounting and/or other metrics information collected from the gaming terminals by the AAA server 492 also may be used to assist in the development of marketing and sales strategies. For example, using data mining or other data correlation techniques, a game provider may be able to determine the popularity of a particular game based on the game's revenue and direct its sale force, accordingly. The AAA server 492 can also be used to account for and generate billing information associated with gaming license sales.

The authentication function of the AAA server 492 provides data integrity capability much like the data integrity servers 476 and 487, described above. Thus, in one embodiment, the AAA server 492 maintains a current database (master list) of all information associated with approved, rejected, or withdrawn gaming software provided by the game provider, including gaming software components, jurisdiction, signatures for authentication purposes, etc.; provides authentication and verification capability of gaming terminal software components approved for use by gaming terminals; coordinates the steps necessary to shut down a gaming terminal that has been determined to be running unapproved, unauthentic, or illegal software; and collects revenue data from any number of sources including the individual gaming terminals, the gaming terminal servers 436, 446, 456, the customer corporate center(s) 426, and the game provider data center network(s) 428. The AAA server 492 may also be capable of ensuring that databases maintained by other servers in the gaming system network environment 400 are current, in one embodiment.

Although not shown, a separate data integrity server may be included in the game provider data center network 428 or the functionality of the data integrity server (discussed above) may be included in another server within the game provider data center network 428.

The authorization function of the AAA server 492 provides authorization capability to the game provider data center 428 for any number of gaming related activities, in one embodiment. For example, the AAA server 492 may authorize or deny a gaming license request from the customer corporate center 426 based on a number of factors such as general jurisdiction information (from the jurisdiction data center 430), whether the game associated with the gaming license has been approved for a particular jurisdiction (from the license server 486), credit worthiness of the requesting customer (from the AAA server 492), etc.

### e₍₁₎. Gaming Software Approval Routine

FIG. 6 is a high level flowchart of an embodiment of a gaming software approval routine 600 that may be performed by one or more gaming devices and the security elements of the secure gaming system environment 100 and/or the detailed secure gaming system 400. As will be appreciated by those of ordinary skill in the art, the steps of the gaming software approval routine 600 may vary and may be executed in any number of the servers illustrated in FIG.4 or FIG.1.

Once designed, compiled, and tested by a game provider, gaming software (e.g., software components for a slot game) retains a status of "unapproved" until it has been reviewed, tested, and "accepted" by a jurisdiction regulator. In the illustrated example, the unapproved gaming software is maintained in the global game server 490. The unapproved gaming software is forwarded (block 602) from the global game server 490 to the jurisdiction test lab 485 where lab testing and review is performed (block 604) by jurisdiction regulators. The lab testing may include verifying the gaming software, reviewing the pay tables associated with the gaming software, etc., in order to ensure that the gaming terminal complies with jurisdiction regulations and policies. When approval is granted by the jurisdiction regulators, notification of the approval is received by the global game server 490 (block 606). Upon notification of approval, the status of gaming software is changed (block 608) from the unapproved state to an "approved" state, and an approval number is assigned to the gaming software by the global game server 490. The approval number may come, from a jurisdictional authority or it may come from an internally controlled approval database. The "approved" status indicates that the game associated with the approved gaming software is approved for use in the region represented by the jurisdiction data center 430.

After the approval process is complete, licenses associated with the approved new game are made available for purchase to customers in the jurisdiction. Typically, a separate license is required for every gaming terminal running the approved new game. The approved gaming software may additionally be downloaded to the regional game server 483.

A request to purchase a license(s) for the approved new game may come from the individual customer network 420, 422, 424 or the customer corporate center 426. The request may be made via a secure communication path such as the VPN 414. Upon payment (that may be delivered via the VPNs 412, 414), the request for the license is processed and accepted using suitable procedures (block 610). Upon completion of the purchase on behalf of the individual customer networks 420, 422, 424 or the customer corporate center 426, the approved new game is downloaded (block 612) from the regional or global game servers 483, 490, either directly to the individual customer network servers 436, 446, 456 for subsequent downloading to the gaming terminals, or to a server (e.g., customer data integrity server 476) in the customer corporate center 426. If delivered to the server in the customer corporate center 426, the approved new game can subsequently be downloaded to a gaming terminal(s) anytime thereafter, depending on the needs of the customer networks 420, 422, 424.

The operations and maintenance (O&M) server 484 is configured to provide operations, administration, maintenance, and provisioning functions for designated gaming devices and associated hardware/software of the detailed secure gaming system 400, in one embodiment. The level of operations, administration, and maintenance performed by the O&M server 484 varies depending on complexity of the detailed secure gaming system 400. For example, diagnostic tools provided by the O&M server 484 may be enhanced by the addition of corresponding diagnostic tools in the gaming terminals or in the gaming software. Tasks performed by the O&M server 484 may also be performed in other servers of the detailed secure gaming system 400 to ensure redundancy.

Although too numerous to mention, some of tasks required for operations, administration, and maintenance functions by the O&M server 484 can include monitoring service data such as hopper empty indicators from gaming terminals, remotely diagnosing software and hardware anomalies associated with the gaming devices, performing automated fixes to the gaming devices, automatically facilitating gaming device part ordering and delivery, coordinating and instructing individual field operation technicians or crews, analyzing gaming data to identify recurring problems and patterns (i.e., data mining) in the gaming devices, responding to manual requests for operations and service, automating coordinating gaming software downloads, etc.

A router 494 is provided to route gaming data from the game provider regional data center 428 to other devices within the detailed secure gaming system 400, and vice versa.

### IV. GAMING TERMINAL

Fig. 7 is a perspective view of one possible embodiment of a gaming terminal 750. The gaming terminal 750 may be any type of casino gaming terminal and may have varying structures and methods of operation. For example, the gaming terminal 750 may be a mechanical gaming terminal configured to play mechanical slot, or it may be an electromechanical or video gaming terminal configured to play a video casino game such as blackjack, slots, keno, poker, a video lottery game, any number of class II or class III games defined by the Indian Gaming Regulatory Act (IRGA), and so on. For exemplary purposes, various elements of the gaming terminal 750 are described below, but it should be understood that numerous other elements may exist and may be utilized in any number of combinations to create a variety of gaming terminal types.

Referring to Fig. 7, the casino gaming terminal 750 may include a cabinet 712 that includes a door 714 on the front of the gaming terminal 750. The door 714 provides access to the interior of the gaming terminal 750. Attached to the door 714 are audio speaker(s) 717 and belly glass 718 that enable auditory and visual effects to add to the excitement of the gaming experience. For example, the audio speaker(s) 717 may generate audio representing sounds such as the noise of spinning slot machine reels, a dealer's voice, music, announcements or any other audio related to a casino game. Visual effects, including flashing or other patterns displayed from lights behind the belly glass 718, may attract a player to the game and may enhance player excitement.

Also attached to the door 714 are a number of value input devices (discussed below). The value input devices may include a coin slot acceptor 720 or a note acceptor 722 to input value to the gaming terminal 750. The note acceptor 722 may accept value in any number of forms, including currency or a currency-sized paper ticket voucher inscribed with information such as a bar code representing value, the name of the casino, the date, etc. A value input device may include any device that can accept value from a customer. As used herein, the term "value" may encompass gaming tokens, coins, paper currency, ticket vouchers, credit or debit cards, smart cards, and any other object representative of value.

The gaming terminal 750 also includes a player tracking area 723 having a card reader 724, a keypad 725 and a display 726. As will be appreciated by those of ordinary skill in the art, the player tracking area 723 may be located in any number of areas of the gaming terminal 750. The display 726 may be configured using a vacuum fluorescent display (VFD), a liquid crystal display (LCD), and/or a touch screen, and may be used to display simple information to a game player or casino employee. The card reader 724 may include any type of card reading device, such as a magnetic card reader, smart card reader or an optical card reader. The card reader 724 may be used to read data from a card (e.g., a credit card, a player tracking card, or a smart card) offered by a player. If provided for player tracking purposes, the card reader 724 may be used to read data from, and/or write data to, player tracking cards capable of storing data. Such data may include the identity of a player, the identity of a casino, the player's gaming habits, etc. Once gathered, the data may be "mined" (i.e., the data is sorted to identify patterns and establish relationships) for any number of purposes including administering player awards, distinguishing player preferences and habits, accounting, etc.

The card reader 724 may also be used by casino personnel (e.g., a slot technician) to gain access to the gaming terminal in order to perform tasks such as coin collection, hopper filling, etc. In that case, the casino employee may also be required to enter an identifying code, for example a PIN number, via the keypad 725. The keypad may also be used by the casino employee to enter additional information regarding the task. In this way, access to the interior of the gaming terminal 750 is restricted.

If provided on the gaming terminal 750, a ticket printer 729 may be used to print or otherwise encode ticket vouchers 730 with the casino name, the type of ticket voucher, a validation number, a bar code with control and/or security data, the date and time of issuance of the ticket voucher, redemption instructions and restrictions, a description of an award, and/or any other information that may be necessary or desirable. A variety of types of ticket vouchers 730 could be used, such as casino chip ticket vouchers, cash-redemption ticket vouchers, bonus ticket vouchers, extra game play ticket vouchers, merchandise ticket vouchers, restaurant ticket vouchers, show ticket vouchers, etc.

The gaming terminal 750 may also include a video display 731 for displaying images relating to the game or games provided by the gaming unit 750, and an information table (not shown) viewable through the door 714. The video display 731 may be a cathode ray tube (CRT), a high resolution LCD including an LCD-TFT display, a plasma display, or any other type of video display suitable for use in a gaming terminal. The video display 731 may be configured to provide animation, 2-D or 3-D images, digital video playback, and or any number of other suitable displays. The information table typically includes general game information such as game denominations (e.g., $0.25, $1, $5) and payline options. In the alternative, the gaming terminal 750 may also include a number of mechanical reels and an information table (not shown) viewable through the door 714.

The gaming terminal 750 may also include a box top 734 configured to intensify player excitement through the use of additional speaker(s) 736, a bonus video display screen 738, and an optional microphone (not shown) and camera (not shown). The bonus video display screen 738, configured as a backlit silk screen panel, an LCD screen, or a video monitor, can enable a number of game enhancements such as bonus games, tournament games, progressive jackpot games, etc. In addition, a tower light or candle 742 mounted atop the gaming terminal 750 may be included to provide a quick visual indication of the status of the gaming terminal 750. The candle 742 can have any number of configurations and purposes. For example, the candle 742 may be constructed as a clear tube structure containing a variety of staggered color inserts, which when illuminated in predetermined patterns, indicates a status of the gaming terminal 750 to a player (e.g., money denomination indicator, jackpot winner indicator) or to casino personnel (e.g., maintenance problem). The candle 742 may also provide a location for additional peripheral devices.

The gaming terminal 750 may also includes a player control panel 744. The player control panel 744 may be provided with a number of pushbuttons or touch-sensitive areas (i.e., touch screen) that may be pressed by a player to select games, make wagers, make gaming decisions, etc. As used herein, the term "button" is intended to encompass any device that allows a player to make an input, such as a mechanical input device that must be depressed to make an input selection or a display area that a player may simply touch. The number of pushbuttons may include one or more "Bet" buttons for wagering, a "Max Bet" button for making the maximum wager allowable for the game, a "Play" button for beginning pay, a "Repeat" button for repeating the previous wagering selection, a "Collect" button for terminating play and cashing out of the game, a "Help" button for viewing a help screen, a "Pay Table" button for viewing the pay tables, a "See Pays" button for causing the video display 731 to generate one or more display screens showing the odds or payout information for the game or games provided by the gaming terminal 750, and a "Call Attendant" button for calling an attendant. In addition, if the gaming terminal 750 provides a slot game having a plurality of reels (video or electro-mechanical), the player control panel 744 may be provided with a number of wager selection buttons, each of which allows a player to specify a wager amount for each pay line selected (via selecting multiple amounts of the smallest wager accepted). Additional game specific buttons may also be provided on the player control panel 744 or elsewhere on the gaming terminal 750 to facilitate play of a specific game executing on the gaming terminal 750.

If the gaming terminal 750 is configured as a mechanical slot game having a number of reels and a number of selectable pay lines which define winning combinations of reel symbols, the control panel 744 also includes a number of selection buttons. The selection buttons allow the player to select one of a number of possible of pay lines prior to spinning the reels. For example, five selection buttons may be provided to allow a player to select between one, three, five, seven or nine pay lines prior to each reel spin.

As will be understood by those of ordinary skill in the art, the term "control panel" should not be construed to imply that a panel separate from the housing 712 of the gaming terminal 750 is required, and the term "control panel" may encompass a plurality or grouping of player activatable buttons. Further, although the control panel 744 is shown to be separate from the video display 731, it should be understood that the control panel 744 could be generated by the video display 731 as a touch-sensitive screen.

Although not separately illustrated, the gaming terminal 750 includes a number of universal asynchronous receiver/transmitter ports to facilitate the addition of auxiliary components such as the ticket printer, the touchscreen, the bill validator, etc. Universal asynchronous receiver/transmitter ports may also be included on gaming terminal 750 to enable progressive jackpot capability, diagnostic capability, jurisdiction system capability, server system capability, etc.

FIG. 8 is a flowchart of an embodiment of a main routine 800 that may be performed during operation of one or more of the gaming terminals of FIG. 1 and FIG 4. The main routine 800 may be stored in one or more of the memories of the controller 200, or it may be stored remotely outside of the gaming terminal 750.

Referring to FIG. 8, the main operating routine 800 may begin operation when the controller 200 detects a value input from a game player (block 802). The controller 200 may detect the value input in any number of ways. For example, the controller 200 may detect the value input if the player deposited one or more coins, paper currency, a card, or a voucher into the gaming terminal 750. Alternatively, the controller 200 may simply detect a player in the vicinity of the gaming terminal 750, either by well known detection methods (e.g., motion detectors, IR sensors) or by the player pressing any button on the gaming terminal 750, and respond accordingly.

Upon detection of the value input, the gaming terminal 750 may terminate its attraction sequence (i.e., a visual and/or audio display designed to attract a player to that particular gaming terminal), if provided, and display a base game list generated (block 804) by the controller 200. The base game list allows the player to view and select from among games available for play on the gaming terminal 750. In addition, the controller 200 may also display player instructions, odds of winning, etc., to the player. Alternatively, in the case of a single-game machine such as a mechanical slot game, upon detection of the value input, the gaming terminal 750 may generate only a single-game routine.

Upon base game selection by the player (block 806), the controller 200 causes one of the number of base game routines to be performed to allow game play (block 808). For example, the base game routines could include a video slot routine, a video poker routine, a video blackjack routine, a video bingo routine, a video keno routine, etc. Upon winning the base game, the controller may dispense credit to the player. If no base game selection is made by the player within a predetermined time period, the gaming terminal 750 may revert back to the beginning of the main routine 800 and, optionally, display an attraction sequence.

After one of the base game routines (e.g., video slot routine, a video poker routine, a video blackjack routine, a video bingo routine, a video keno routine, etc.) has been performed to allow base game play, the controller 200 determines if the player is entitled to an award and/or a bonus game play award (block 810). If an award is due, the controller 200 dispenses credit to the player as discussed above in connection with FIG. 7.

The bonus game play award may include providing specialty games such as Hollywood Squares, Reel 'Em In, Monopoly etc., or may include providing free additional base game play, for example, free spins in the case of a slot game. Awarding bonus game play is typically triggered by one of a number of predetermined results such as player winning via a particular combination of reel symbols, selecting a particular symbol, etc. If the controller 200 determines that the player is entitled to bonus game play, the controller 200 enables bonus game play (block 812).

Upon completion of the bonus game play by the player, the controller 200 determines (block 814) whether the player wishes to continue play (via selecting the "Repeat" button) or wishes to terminate the game and cash out (via selecting the "Collect" button). If the player selects to terminate the game and has a credit balance, the controller 200 may dispense (block 816) the credit balance to the player in any number of forms discussed above in connection with FIG. 7. If the player wishes to continue, the controller 200 may again generate the base game selection display, enable base game option selections, or in the case of a single-game machine, may enable the player to select the appropriate game parameters.

If the controller 200 determines that the player is not entitled to bonus game play, it enables additional base game play for the player as discussed above. If the player does not want to continue play, the controller 200 also enables a cash-out pption (block 816) to dispense remaining credit to the player.

### Slots:

FIG. 9 is an exemplary visual display 900 that may be displayed on the video display 731 during performance of a slot routine. In the illustrated example, the exemplary visual display 900 include video images 902 of five slot machine reels, each of the five reels having a number of reel symbols 904 disposed thereon. Although the exemplary visual display 900 shows five reel images with three reel symbols visible per reel, other reel configurations may be utilized.

The exemplary visual display 900 also includes a number of buttons to enable slot game play by a player. In the illustrated example, selection of a "Collect" button 914 allows the player to collect winnings at the completion of the slot game; selection of the "Pay Table" button 916 allows the player to view the pay table associated with the slot game; selection of the "Select Lines" button 917 allows the player to select the number of line to be bet; selection of the "Bet Per Line" button 918 allows the player to change the amount of credits bet on each line; selection of the "Spin Reels" button 920 allows the player to spin the reel images 902; selection of the "Max Bet Spin" button 922 allows the player to bet maximum credits instantly. A "Help" button may also be included to allow the player to get instruction on the slot game play.

FIG. 10 is a flowchart of an embodiment of the slot routine 1000 that may be performed by one or more of the gaming terminals. The slot routine 1000 may be stored in one or more of the memories of the controller 200, or it may be stored remotely outside of the gaming terminals 22. For example, the slot routine 1000 may be stored in the server 28.

Referring to FIG. 10, the slot routine 1000 may begin operation when the controller 200 detects a value input from a game player (block 1002). The controller 200 detects the value input if a player deposited one or more coins, paper currency, a card, or a voucher into the gaming terminal 22. Upon detection of the value input, the controller 200 enables a base game to be played. In the illustrated example, the base game comprises a slot game. However, the base game may also comprise any number of other "traditional" casino games such as video poker, video blackjack, video keno, video bingo, videb pachinko, video lottery, etc, as discussed in connection with FIG. 8.

After value input detection, the controller 200 enables a payline selection (block 1004) and a bet-per-payline selection (block 1006) as follows. First, the player may either depress a button such as a "Select Lines" pushbutton provided on the on the player control panel 744 to make a payline selection or depress a video display button provided by a touch screen on the gaming terminal 22. The payline selection causes one or more paylines to be activated. For example, in the illustrated example, the player may select 3 horizontal paylines, a "V" shaped payline, an inverted "V" shaped payline, etc. across 5 reels. Second, the player may either depress a button such as a "Bet Per Line" pushbutton provided on the player control panel 744 to make a bet per payline selection or depress a button provided by a touch screen on the gaming terminal 22. The bet-per-payline selection causes an amount per payline to be wagered with the total wager divided equally between each selected payline. In addition, the controller 200 enables the player to select a maximum bet (via a "Max Bet Spin" button). Thus, the player may chose maximum bet option causing maximum payline selection and maximum credits (block 1010) rather than the payline selection (block 1004) and the bet per payline selection (block 1006).

After receiving the value input and detecting a payline and bet-per-payline, the controller 200 enables play of the base game (block 1008). For example, in the illustrated example, the player may spin the reels by depressing a button such as a "Spin Reels" pushbutton provided on the on the player control panel 744 or depressing a video display button provided by a touch screen on the gaming terminal 22. Alternatively, if the slot game is a mechanical slot game comprising a number of mechanical reels having reels symbols disposed thereon, the player may pull a handle provided on the gaming terminal 22 to initiate the reel spin.

Upon completion of the base game, the controller 200 determines whether the player,has won (block 1012). A paytable, typically displayed on the gaming terminal 22, displays the winning combinations of reel symbols. If the player has won, the controller 200 credits the player's value input based on the paylines and the bet-per-payline selected (block 1014). If the controller 200 determines that the player has not won, the gaming terminal 22 enables additional slot game play for the player (block 1024). The controller 200 also enables a cash-out option (block 1026) via a cash-out button, for example, a "Collect" button provided on the gaming terminal 22. Upon selection of the cash-out button, the gaming terminal dispenses value (block 1028) to the player. The value may be dispensed as coins, paper currency, a credit on a card, or a voucher indicating credit.

In some cases, the controller 200 determines that the player is entitled to an optional bonus game award (block 1016) and enables bonus game play (block 1018). If the controller 200 determines that the player is not entitled to bonus game play, it enables additional slot game play for the player (block 1024). The player may then play again if value input remains (block 1002) or, if no value input remains, the player may deposit additional value input. If additional slot game play is not desired, a cash-out option (block 1026) via the cash-out button is available to the player. Upon selection of the cash-out button, the gaming terminal dispenses value (block 1028) to the player.

Upon completion of the bonus game (block 1018), the controller 200 determines whether the player has won (block 1020). If the player has won, the controller 200 credits the player's value input based on a bonus game paytable (block 1022). If the controller 200 determines that the player has not won, the gaming terminal 22 enables additional slot game play for the player (block 1024). If additional slot game play is not desired, a cash-out option (block 1026) via the cash-out button is available to the player. Upon selection of the cash-out button, the gaming terminal dispenses value (block 1028) to the player.

As may be apparent from the discussion above, embodiments of the present invention provide security methods and apparatus for a secure gaming system environment. The security methods and apparatus are configured in a layered fashion, in one embodiment, as described above to ensure software, hardware, and firmware integrity of the gaming devices, security elements and associated communication networks of the secure gaming system environment.

The security methods and apparatus utilize a combination of perimeter defenses, in one embodiment, such as firewalls, anti-virus software and anti-virus scanners; two factor authentication; authentication of gaming software/data before and after installation including "on demand" authentication; authentication, authorization, and accounting of the gaming sessions; data integrity assurance of designated software files in designated gaming devices in the secure gaming system environment including gaming devices at the network level, the server level and the gaming terminal level; gaming software vulnerability assessment (VA); network VA using network-based scanners and host-based scanners; security information management including security policy implementation, security teams, security reports, incident response, etc., and network-based and host-based proactive and reactive intrusion detection (ID) systems.

For example, the secure gaming apparatus 24, 30 provides access control at the network level that enables secure communication between and among the gaming devices. Access control provided by the secure gaming apparatus 24, 30 is enabled via one or more of VPN application software, firewalls, VPN tunneling protocols, and cryptographic methods/protocols, in one embodiment. The access control apparatus 25, 34 provides access control and authorization determination at the gaming device level. Access control to the gaming devices including software, peripherals, memory, etc. is enabled via access restriction methods provided by the access control apparatus 25, 34, in one embodiment. The access restriction methods include, in one embodiment, gaming device specific firewalls, usernames and passwords, biometric identifiers, access tokens, time-based access, and cryptographic methods/protocols.

The integrity apparatus 26, 32 provides access control at both the network and gaming device levels, in one embodiment, to ensure integrity, authentication, and non-repudiation of gaming software programs received or residing gaming software/data. Access control to the gaming devices including software, peripherals, memory, etc. by the integrity apparatus 26, 32 is enabled, in one embodiment, using one or more individual authentication protocols, for example, MACs, one-way hash algorithms, public-key cryptography (PKI), digital signature schemes or code signing, symmetric encryption, session keys, and random number generators, to name a few. Other advantages of the inventive subject matter may be further apparent to those of skill in the art.

The various procedures described herein can be implemented in hardware, firmware or software. A software implementation can use microcode, assembly language code, or a higher-level language code. The code may be stored on one or more volatile or non-volatile computer-readable media during execution or at other times. These computer-readable media may include hard disks, removable magnetic disks, removable optical disks, magnetic cassettes, flash memory cards, digital video disks, Bernoulli cartridges, RAMs, ROMs, and the like. Accordingly, a computer-readable medium, including those listed above, may store program instructions thereon to perform a method, which when executed within an electronic device, result in embodiments of the inventive subject matter to be carried out.

From the foregoing, it will be observed that numerous variations and modifications may be affected without departing from the scope of the novel concept of the inventive subject matter. It is to be understood that no limitations with respect to the specific methods and apparatus illustrated herein is intended or should be inferred. It is, of course, intended to cover by the appended claims all such modifications as fall within the scope of the claims.

## Claims

1. A method comprising:
a game server receiving a request, over a communication network, from a requestor for a license to use an approved gaming software program;
receiving an indication of payment for the license; and
downloading the approved gaming software program to the requestor in response to the indication of payment.

2. The method of claim 1, wherein the request is received over a secure communication path within the communication network.

3. The method of claim 2, wherein the secure communication path is a virtual private network.

4. The method of claim 1, wherein the requestor is a second game server, the method further comprising:
subsequently downloading the approved gaming software program to one or more gaming terminals.

5. The method of claim 4, wherein subsequently downloading comprises:
the second game server authenticating the one or more gaming terminals;
the second game server encrypting the approved gaming software program; and
the second game server transmitting the approved gaming software program over the communication network.

6. The method of claim 1, further comprising:
forwarding unapproved gaming software to a lab, the lab configured to test compliance of the unapproved gaming software with a plurality of regulations;
receiving a notification of approval of the unapproved gaming software from the lab, the notification of approval indicating compliance of the unapproved gaming software with the plurality of regulations; and
changing a status of the unapproved gaming software to form the approved gaming software.

7. A method comprising:
receiving a notification of approval of unapproved gaming software, over a communication network, the notification of approval indicating compliance of the unapproved gaming software with a plurality of regulations; and
changing a status of the unapproved gaming software to form approved gaming software.

8. The method of claim 7, further comprising:
forwarding the unapproved gaming software over the communication network to a lab, the lab configured to test compliance of the unapproved gaming software with the plurality of regulations.

9. The method of claim 7, further comprising:
the game server receiving a request, over a communication network, from a requestor for a license to use the approved gaming software;
receiving an indication ofpayment for the license; and
downloading the approved gaming software to the requestor in response to the indication of payment.

10. A method comprising:
receiving unapproved gaming software by a game server of a secure gaming system;
forwarding, using one of a plurality of secure communication links within a communication network, the unapproved gaming software to a jurisdiction lab of the secure gaming system, the jurisdiction lab configured to test compliance of the unapproved gaming software with a plurality of jurisdiction regulations and policies;
receiving a notification of approval of the unapproved gaming software from the jurisdiction lab, the notification of approval indicating compliance of the unapproved gaming software with the plurality of jurisdiction regulations and policies;
changing a status of the unapproved gaming software to form approved garning software, the approved gaming software having an approval identifier;
receiving a request to purchase a license for the approved gaming software, the license entitling a holder of the license to use the approved gaming software; and
forwarding, using another of the plurality of secure communication links, the approved gaming software to a gaming device of the secure gaming system upon receipt of a payment for the license, the gaming device owned by the holder of the license.

11. The method of claim 10, wherein the unapproved gaming software comprises gaming software compiled and tested by a game provider.

12. The method of claim 10, wherein each of the plurality of secure communication links includes one or more security elements selected from a group of security elements that includes a virtual private network application software, a virtual private network tunneling protocol software, a firewall, a dedicated communication link, and a cryptographic protocol.

13. The method of claim 12, wherein the cryptographic protocol is selected from a group of protocols that includes a message authentication code protocol, a one-way hash protocol, a public-key cryptography protocol, a digital signature protocol, a symmetric encryption protocol, and a random number generator protocol.

14. A gaming system comprising:
a first server, that receives a request, over a communication network, from a requestor for a license to use an approved gaming software program, receives an indication of payment for the license, and download the approved gaming software program to the requestor in response to the indication of payment.

15. The gaming system of claim 14, further comprising:
a second server, as the requestor, which is communicatively coupled to the first server over the communication network, wherein the second server subsequently downloads the approved gaming software program to one or more gaming terminals.

16. The gaming system of claim 14, further comprising:
one or more gaming terminals, which ultimately receive and execute the approved gaming software.

17. A computer-readable medium having program instructions stored thereon to perform a method, which when executed within an electronic device, result in:
a game server receiving a request, over a communication network, from a requestor for a license to use an approved gaming software program;
receiving an indication of payment for the license; and
downloading the approved gaming software program to the requestor in response to the indication of payment.

18. A computer-readable medium having program instructions stored thereon to perform a method, which when executed within an electronic device, result in:
receiving a notification of approval of unapproved gaming software, over a communication network, the notification of approval indicating compliance of the unapproved gaming software with a plurality of regulations; and
changing a status of the unapproved gaming software to form approved gaming software.

19. The computer-readable medium of claim 18, wherein performing the method further results in:
forwarding the unapproved gaming software over the communication network to a lab, the lab configured to test compliance of the unapproved gaming software with the plurality of regulations.

20. The computer-readable medium of claim 18, wherein performing the method further results in:
receiving a request, over the communication network, from a requestor for a license to use the approved gaming software;
receiving an indication of payment for the license; and
downloading the approved gaming software to the requestor in response to the indication of payment.
